# EUROPEAN PATENT SPECIFICATION

(11) **EP 4 068 842 B1**
(45) Date of publication and mention of the grant of the patent: **14.05.2025**
(21) Application number: 19958389.9
(22) Date of filing: 31.12.2019
(51) Int. Cl.: H04W 28/02, H04W 40/24, H04W 92/18, H04W 88/04

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 05.10.2022
(73) Proprietor: Huawei Technologies Co., Ltd., Shenzhen, Guangdong 518129 (CN)
(72) Inventor: WANG, Jun, Shenzhen, Guangdong 518129 (CN); DAI, Mingzeng, Shenzhen, Guangdong 518129 (CN); PENG, Wenjie, Shenzhen, Guangdong 518129 (CN); ZHANG, Peng, Shenzhen, Guangdong 518129 (CN); XU, Hua, Shenzhen, Guangdong 518129 (CN)
(74) Representative: Pfenning, Meinig & Partner mbB
(86) International application number: PCT/CN2019/130937
(87) International publication number: WO 2021/134697

(56) References cited:
- WO-A1-2016/163835
- CN-A- 109 756 925
- CN-A- 110 139 322
- CN-A- 110 268 787
- KR-A- 20190 034 094
- US-A1- 2018 213 577
- ZTE: "Considerations on the evolved UE-to-Network Relay scenario and architecture", 3GPP DRAFT; R2-165254 CONSIDERATIONS ON THE EVOLVED UE-TO-NETWORK RELAY SCENARIO AND ARCHITECTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Göteborg; 20160822 - 20160826, 21 August 2016 (2016-08-21), Mobile Competence Centre ; 650, route des Lucioles ; F-06921 Sophia-Antipolis Cedex ; France, XP051126840

## Description

### TECHNICAL FIELD

This application relates to the communication field, and in particular, to communication methods, apparatuses, computer readable storage media, and computer program products.

### BACKGROUND

Document KR 2019 0034094 A discloses a technique for relaying and processing data from other nodes.

Document US 2018/213577 A1 discloses methods and apparatus relating to layer 2 relaying and mobility using a sidelink interface.

In a current new radio (new radio, NR) communication technology, layer 2 (layer 2, L2) relay (relay) communication of terminals is proposed, to support control plane interaction between a network device and a remote terminal device (that is, a terminal device that accesses the network device by using a relay terminal device), and support radio resource control (radio resource control, RRC) signaling exchange between the network device and the remote terminal device, and to improve communication assurance of the network device for the remote terminal device in the relay communication. However, currently, a data transmission process between the network device and the remote terminal device in this architecture is not specified. Consequently, efficiency of the data transmission process in this scenario is currently low.

Currently, in the L2 relay communication architecture, efficiency of data transmission between the network device and the remote terminal device needs to be improved.

### SUMMARY

This application provides communication methods, apparatuses, computer readable storage media, and computer program products according to the independent claims, to improve efficiency of data transmission between a network device and a remote terminal device in an L2 relay communication architecture.

The invention is defined by the independent claims; the dependent claims define particular embodiments of the invention.

According to a first aspect, this application provides a communication method. The communication method may be performed by a network device or a chip in a network device, such as a base station.

According to this method, a network device sends first information to a first communication apparatus, where the first information indicates a correspondence between a first data radio bearer and a second data radio bearer, the first data radio bearer is a data radio bearer between the network device and the first communication apparatus, the second data radio bearer is a data radio bearer between the first communication apparatus and a second communication apparatus; and the network device further sends second information to a second communication apparatus, where the second information indicates a correspondence between a first packet data convergence protocol (packet data convergence protocol, PDCP) entity of a universal user to network interface (universal user to network interface, Uu interface) of the second communication apparatus and a first radio link control (radio link control, RLC) entity of a sidelink (sidelink, SL) interface of the second communication apparatus, and the first RLC entity corresponds to the second data radio bearer.

According to the foregoing method, the network device configures, for the first communication apparatus, the correspondence between the first data radio bearer and the second data radio bearer, so that the first communication apparatus learns that relay transmission between the network device and the second communication apparatus is performed by using the first data radio bearer and the second data radio bearer. In addition, the network device configures, for the second communication apparatus, the correspondence between the RLC entity of the SL interface corresponding to the second data radio bearer and the PDCP entity of the Uu interface, so that the second communication apparatus can efficiently determine the PDCP entity used for relay transmission. The foregoing communication method improves data transmission efficiency of L2 relay communication.

For example, the first information may include a source identifier of the second data radio bearer and/or a destination identifier of the second data radio bearer.

The first data radio bearer does not include a PDCP entity of the first communication apparatus, and the second data radio bearer does not include the PDCP entity of the first communication apparatus.

In a possible example, the network device may further send third information to a third communication apparatus, and the third information may indicate a correspondence between a third data radio bearer and a fourth data radio bearer. The third data radio bearer is a data radio bearer between the network device and the third communication apparatus, and the fourth data radio bearer is a data radio bearer between the third communication apparatus and the second communication apparatus. In addition, the network device may further send fourth information to the second communication apparatus, where the fourth information may indicate a correspondence between the first PDCP entity and a second RLC entity of the SL interface of the second communication apparatus, and the second RLC entity corresponds to the fourth data radio bearer.

In the foregoing design, the first PDCP entity is associated with both the first RLC entity and the second RLC entity of the SL interface. Therefore, a same PDCP entity of the Uu interface may process data of a plurality of RLC entities of the SL interface, which makes it possible to introduce duplication transmission and split transmission in the L2 relay communication.

In this example, the third data radio bearer does not include a PDCP entity of the third communication apparatus, and the fourth data radio bearer does not include the PDCP entity of the third communication apparatus.

In another possible example, the network device may further send fifth information to the second communication apparatus, where the fifth information may indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

In the foregoing design, the first PDCP entity is associated with both the first RLC entity of the SL interface and the third RLC entity of the Uu interface. Therefore, a same PDCP entity of the Uu interface may process data of a plurality of RLC entities, which makes it possible to introduce duplication transmission and split transmission in the L2 relay communication.

According to a second aspect, an embodiment of this application provides a communication method. The method may be performed by a first communication apparatus or a chip in a first communication apparatus. The first communication apparatus may include a relay device, such as a terminal, which is configured to relay a second communication apparatus to a network device.

According to the method, the first communication apparatus receives first information from the network device, where the first information indicates a correspondence between a first data radio bearer and a second data radio bearer. The first data radio bearer is a data radio bearer between the network device and the first communication apparatus, the second data radio bearer is a data radio bearer between the first communication apparatus and the second communication apparatus, a first RLC entity of an SL interface of the second communication apparatus corresponds to the second data radio bearer, and a first PDCP entity of a Uu interface of the second communication apparatus corresponds to the first RLC entity of the SL interface.

For example, the first data radio bearer does not include a PDCP entity of the first communication apparatus, and the second data radio bearer does not include the PDCP entity of the first communication apparatus.

The first communication apparatus may further receive data from the network device by using the first data radio bearer, and send the data to the second communication apparatus by using the second data radio bearer.

In addition, the first communication apparatus may further receive data from the second communication apparatus by using the second data radio bearer, and send the data to the network device by using the first data radio bearer.

The first information may include a source identifier of the second data radio bearer and/or a destination identifier of the second data radio bearer.

According to a third aspect, a communication method is provided. The third aspect is not an embodiment of the present invention but helpful for understanding certain aspects thereof. The method may be performed by a second communication apparatus or a chip in a second communication apparatus. The second communication apparatus may include a device, such as a terminal, which is configured to communicate with a network device through relay of a first communication apparatus.

According to the method, the second communication apparatus may receive second information from the network device, where the second information may indicate a correspondence between a first PDCP entity of a Uu interface of the second communication apparatus and a first RLC entity of an SL interface of the second communication apparatus. The first RLC entity corresponds to a second data radio bearer, the second data radio bearer is a data radio bearer between the first communication apparatus and the second communication apparatus, a first data radio bearer is maintained between the first communication apparatus and the network device, and the first data radio bearer corresponds to the second data radio bearer.

For example, the first data radio bearer does not include a PDCP entity of the first communication apparatus, and the second data radio bearer does not include the PDCP entity of the first communication apparatus.

In a possible example, the second communication apparatus may further receive fourth information from the network device, where the fourth information is used to indicate a correspondence between the first PDCP entity and a second RLC entity of the SL interface of the second communication apparatus. The second RLC entity corresponds to a fourth data radio bearer, the fourth data radio bearer is a data radio bearer between a third communication apparatus and the second communication apparatus, a third data radio bearer is maintained between the third communication apparatus and the network device, and the fourth data radio bearer corresponds to the third data radio bearer.

In this example, the third data radio bearer does not include a PDCP entity of the third communication apparatus, and the fourth data radio bearer does not include the PDCP entity of the third communication apparatus.

In a possible example, the second communication apparatus may further receive fifth information from the network device, where the fifth information is used to indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

According to a fourth aspect, an embodiment of this application provides a communication apparatus. The communication apparatus is configured to perform the steps performed by the network device in any one of the first aspect or the possible designs of the first aspect. The communication apparatus may implement functions, steps, or operations in the foregoing methods in a form of a hardware structure, a software module, or a combination of a hardware structure and a software module. For example, function modules corresponding to the functions, the steps, or the operations in the foregoing methods may be disposed in the communication apparatus, to support the communication apparatus in performing the foregoing methods.

For example, the communication apparatus may be a network device or a chip in a network device.

When the communication apparatus shown in the fourth aspect is implemented by using the software module, the communication apparatus may include a communication module. For example, the communication module may be coupled to a processing module, and the communication module may be configured to support the communication apparatus in performing communication. The processing module may be used by the communication apparatus to perform a processing operation, for example, generate information/a message that needs to be sent, or process a received signal to obtain information/a message.

The communication module may be configured to perform a sending and/or receiving action of the network device in the foregoing method, for example, configured to perform an action of sending information, a message, or signaling by the network device to a first communication apparatus, a second communication apparatus, and a third communication apparatus. In addition, the processing module may be configured to perform a processing action of the network device in the foregoing method, for example, configured to control the communication module to receive and/or send information, a message, or signaling, process and store the information, and the like.

Specifically, the communication module may be configured to send first information to the first communication apparatus. The first information may indicate a correspondence between a first data radio bearer and a second data radio bearer, the first data radio bearer is a data radio bearer between the network device and the first communication apparatus, and the second data radio bearer is a data radio bearer between the first communication apparatus and the second communication apparatus. The communication module may be further configured to send second information to the second communication apparatus, where the second information may indicate a correspondence between a first PDCP entity of a Uu interface of the second communication apparatus and a first RLC entity of an SL interface of the second communication apparatus, and the first RLC entity corresponds to the second data radio bearer.

For example, the first information may include a source identifier of the second data radio bearer and/or a destination identifier of the second data radio bearer.

The first data radio bearer does not include a PDCP entity of the first communication apparatus, and the second data radio bearer does not include the PDCP entity of the first communication apparatus.

In a possible example, the communication module may further send third information to a third communication apparatus, and the third information may indicate a correspondence between a third data radio bearer and a fourth data radio bearer. The third data radio bearer is a data radio bearer between the network device and the third communication apparatus, and the fourth data radio bearer is a data radio bearer between the third communication apparatus and the second communication apparatus. In addition, the communication module may further send fourth information to the second communication apparatus, where the fourth information may indicate a correspondence between the first PDCP entity and a second RLC entity of the SL interface of the second communication apparatus, and the second RLC entity corresponds to the fourth data radio bearer.

In this example, the third data radio bearer does not include a PDCP entity of the third communication apparatus, and the fourth data radio bearer does not include the PDCP entity of the third communication apparatus.

In another possible example, the communication module may further send fifth information to the second communication apparatus, where the fifth information may indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

When the communication apparatus shown in the fourth aspect is implemented by using a condition component, the communication apparatus may include a transceiver. For example, the transceiver may be coupled to a processor, and the transceiver may be configured to support the communication apparatus in performing communication. The processor may be used by the communication apparatus to perform a processing operation, for example, generate information/a message that needs to be sent, or process a received signal to obtain information/a message.

The transceiver may be configured to perform a sending and/or receiving action of the network device in the foregoing method, for example, configured to perform an action of sending information, a message, or signaling by the network device to a first communication apparatus, a second communication apparatus, and a third communication apparatus. In addition, the processor may be configured to perform a processing action of the network device in the foregoing method, for example, configured to control the transceiver to receive and/or send information, a message, or signaling, process and store the information, the message, or the signaling, and the like.

Specifically, the transceiver may be configured to send first information to the first communication apparatus. The first information may indicate a correspondence between a first data radio bearer and a second data radio bearer, the first data radio bearer is a data radio bearer between the network device and the first communication apparatus, and the second data radio bearer is a data radio bearer between the first communication apparatus and the second communication apparatus. The transceiver may be further configured to send second information to the second communication apparatus, where the second information may indicate a correspondence between a first PDCP entity of a Uu interface of the second communication apparatus and a first RLC entity of an SL interface of the second communication apparatus, and the first RLC entity corresponds to the second data radio bearer.

For example, the first information may include a source identifier of the second data radio bearer and/or a destination identifier of the second data radio bearer.

The first data radio bearer does not include a PDCP entity of the first communication apparatus, and the second data radio bearer does not include the PDCP entity of the first communication apparatus.

In a possible example, the transceiver may further send third information to a third communication apparatus, and the third information may indicate a correspondence between a third data radio bearer and a fourth data radio bearer. The third data radio bearer is a data radio bearer between the network device and the third communication apparatus, and the fourth data radio bearer is a data radio bearer between the third communication apparatus and the second communication apparatus. In addition, the transceiver may further send fourth information to the second communication apparatus, where the fourth information may indicate a correspondence between the first PDCP entity and a second RLC entity of the SL interface of the second communication apparatus, and the second RLC entity corresponds to the fourth data radio bearer.

In this example, the third data radio bearer does not include a PDCP entity of the third communication apparatus, and the fourth data radio bearer does not include the PDCP entity of the third communication apparatus.

In another possible example, the transceiver may further send fifth information to the second communication apparatus, where the fifth information may indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

According to a fifth aspect, an embodiment of this application provides a communication apparatus. The communication apparatus is configured to perform the steps performed by the first communication apparatus in any one of the second aspect or the possible designs of the second aspect. The communication apparatus may implement functions, steps, or operations in the foregoing methods in a form of a hardware structure, a software module, or a combination of a hardware structure and a software module. For example, function modules corresponding to the functions, the steps, or the operations in the foregoing methods may be disposed in the communication apparatus, to support the communication apparatus in performing the foregoing methods.

For example, the communication apparatus may be a first communication apparatus or a chip in a first communication apparatus.

When the communication apparatus shown in the fifth aspect is implemented by using the software module, the communication apparatus may include a communication module. For example, the communication module may be coupled to a processing module, and the communication module may be configured to support the communication apparatus in performing communication. The processing module may be used by the communication apparatus to perform a processing operation, for example, generate information/a message that needs to be sent, or process a received signal to obtain information/a message.

The communication module may be configured to perform a sending and/or receiving action of the first communication apparatus in the foregoing method, for example, configured to perform an action of receiving information, a message, or signaling from a network device, or perform an action of sending information, a message, or signaling to a second communication apparatus. In addition, the processing module may be configured to perform a processing action of the first communication apparatus in the foregoing method, for example, configured to control the communication module to receive and/or send information, a message, or signaling, process and store the information, and the like.

Specifically, the communication module may receive first information from the network device, where the first information may indicate a correspondence between a first data radio bearer and a second data radio bearer. The first data radio bearer is a data radio bearer between the network device and the first communication apparatus, the second data radio bearer is a data radio bearer between the first communication apparatus and the second communication apparatus, a first RLC entity of an SL interface of the second communication apparatus corresponds to the second data radio bearer, and a first PDCP entity of a Uu interface of the second communication apparatus corresponds to the first RLC entity of the SL interface.

For example, the first data radio bearer does not include a PDCP entity of the first communication apparatus, and the second data radio bearer does not include the PDCP entity of the first communication apparatus.

The communication module may further receive data from the network device by using the first data radio bearer, and send the data to the second communication apparatus by using the second data radio bearer.

In addition, the communication module may further receive data from the second communication apparatus by using the second data radio bearer, and send the data to the network device by using the first data radio bearer.

The first information may include a source identifier of the second data radio bearer and/or a destination identifier of the second data radio bearer.

When the communication apparatus shown in the fifth aspect is implemented by using a hardware component, the communication apparatus may include a transceiver. For example, the transceiver may be coupled to a processor, and the transceiver may be configured to support the communication apparatus in performing communication. The processor may be used by the communication apparatus to perform a processing operation, for example, generate information/a message that needs to be sent, or process a received signal to obtain information/a message.

The transceiver may be configured to perform a sending and/or receiving action of the first communication apparatus in the foregoing method, for example, configured to perform an action of receiving information, a message, or signaling from a network device, or perform an action of sending information, a message, or signaling to a second communication apparatus. In addition, the processor may be configured to perform a processing action of the first communication apparatus in the foregoing method, for example, configured to control the communication module to receive and/or send information, a message, or signaling, process and store the information, and the like.

Specifically, the transceiver may receive first information from the network device, where the first information may indicate a correspondence between a first data radio bearer and a second data radio bearer. The first data radio bearer is a data radio bearer between the network device and the first communication apparatus, the second data radio bearer is a data radio bearer between the first communication apparatus and the second communication apparatus, a first RLC entity of an SL interface of the second communication apparatus corresponds to the second data radio bearer, and a first PDCP entity of a Uu interface of the second communication apparatus corresponds to the first RLC entity of the SL interface.

For example, the first data radio bearer does not include a PDCP entity of the first communication apparatus, and the second data radio bearer does not include the PDCP entity of the first communication apparatus.

The transceiver may further receive data from the network device by using the first data radio bearer, and send the data to the second communication apparatus by using the second data radio bearer.

In addition, the transceiver may further receive data from the second communication apparatus by using the second data radio bearer, and send the data to the network device by using the first data radio bearer.

The first information may include a source identifier of the second data radio bearer and/or a destination identifier of the second data radio bearer.

According to a sixth aspect, a communication apparatus is provided. The sixth aspect is not an embodiment of the present invention but helpful for understanding certain aspects thereof. The communication apparatus may be configured to perform the steps performed by the second communication apparatus in any one of the third aspect or the possible designs of the third aspect. The communication apparatus may implement functions, steps, or operations in the foregoing methods in a form of a hardware structure, a software module, or a combination of a hardware structure and a software module. For example, function modules corresponding to the functions, the steps, or the operations in the foregoing methods may be disposed in the communication apparatus, to support the communication apparatus in performing the foregoing methods.

For example, the communication apparatus may be a second communication apparatus or a chip in a second communication apparatus.

When the communication apparatus shown in the sixth aspect is implemented by using the software module, the communication apparatus may include a communication module. For example, the communication module may be coupled to a processing module, and the communication module may be configured to support the communication apparatus in performing communication. The processing module may be used by the communication apparatus to perform a processing operation, for example, generate information/a message that needs to be sent, or process a received signal to obtain information/a message.

The communication module may be configured to perform a sending and/or receiving action of the second communication apparatus in the foregoing method, for example, configured to perform an action of receiving information, a message, or signaling from a network device, and the like. In addition, the processing module may be configured to perform a processing action of the second communication apparatus in the foregoing method, for example, configured to control the communication module to receive and/or send information, a message, or signaling, process and store the information, and the like.

Specifically, the communication module 1101 may receive second information from the network device, where the second information may indicate a correspondence between a first PDCP entity of a Uu interface of the second communication apparatus and a first RLC entity of an SL interface of the second communication apparatus. The first RLC entity corresponds to a second data radio bearer, the second data radio bearer is a data radio bearer between the first communication apparatus and the second communication apparatus, a first data radio bearer is maintained between the first communication apparatus and the network device, and the first data radio bearer corresponds to the second data radio bearer.

For example, the first data radio bearer does not include a PDCP entity of the first communication apparatus, and the second data radio bearer does not include the PDCP entity of the first communication apparatus.

In a possible example, the communication module may further receive fourth information from the network device, where the fourth information is used to indicate a correspondence between the first PDCP entity and a second RLC entity of the SL interface of the second communication apparatus. The second RLC entity corresponds to a fourth data radio bearer, the fourth data radio bearer is a data radio bearer between a third communication apparatus and the second communication apparatus, a third data radio bearer is maintained between the third communication apparatus and the network device, and the fourth data radio bearer corresponds to the third data radio bearer.

In this example, the third data radio bearer does not include a PDCP entity of the third communication apparatus, and the fourth data radio bearer does not include the PDCP entity of the third communication apparatus.

In a possible example, the communication module may further receive fifth information from the network device, where the fifth information is used to indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

When the communication apparatus shown in the sixth aspect is implemented by using a condition component, the communication apparatus may include a transceiver. For example, the transceiver may be coupled to a processor, and the transceiver may be configured to support the communication apparatus in performing communication. The processor may be used by the communication apparatus to perform a processing operation, for example, generate information/a message that needs to be sent, or process a received signal to obtain information/a message.

The transceiver may be configured to perform a sending and/or receiving action of the second communication apparatus in the foregoing method, for example, configured to perform an action of receiving information, a message, or signaling from a network device. In addition, the processor may be configured to perform a processing action of the second communication apparatus in the foregoing method, for example, configured to control the communication module to receive and/or send information, a message, or signaling, process and store the information, and the like.

Specifically, the transceiver may receive second information from the network device, where the second information may indicate a correspondence between a first PDCP entity of a Uu interface of the second communication apparatus and a first RLC entity of an SL interface of the second communication apparatus. The first RLC entity corresponds to a second data radio bearer, the second data radio bearer is a data radio bearer between the first communication apparatus and the second communication apparatus, a first data radio bearer is maintained between the first communication apparatus and the network device, and the first data radio bearer corresponds to the second data radio bearer.

For example, the first data radio bearer does not include a PDCP entity of the first communication apparatus, and the second data radio bearer does not include the PDCP entity of the first communication apparatus.

In a possible example, the transceiver may further receive fourth information from the network device, where the fourth information is used to indicate a correspondence between the first PDCP entity and a second RLC entity of the SL interface of the second communication apparatus. The second RLC entity corresponds to a fourth data radio bearer, the fourth data radio bearer is a data radio bearer between a third communication apparatus and the second communication apparatus, a third data radio bearer is maintained between the third communication apparatus and the network device, and the fourth data radio bearer corresponds to the third data radio bearer.

In this example, the third data radio bearer does not include a PDCP entity of the third communication apparatus, and the fourth data radio bearer does not include the PDCP entity of the third communication apparatus.

In a possible example, the transceiver may further receive fifth information from the network device, where the fifth information is used to indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

According to a seventh aspect, this application provides a communication system. The communication system includes the communication apparatuses shown in the fourth aspect, the fifth aspect, and the sixth aspect.

According to an eighth aspect, an embodiment of this application provides a computer-readable storage medium. The computer-readable storage medium is configured to store a computer program or instructions. When the computer program is executed or the instructions are executed, the method according to the first aspect or the second aspect is implemented.

According to a ninth aspect, an embodiment of this application provides a computer program product. The computer program product includes a computer program or instructions. When the computer program is executed or the instructions are executed, the method according to the first aspect or the second aspect is implemented.

According to a tenth aspect, this application provides a chip and/or a chip system including a chip. The chip may include a processor. When the chip executes a computer program in a memory, the method according to the first aspect or the second aspect is performed. The chip system may include the chip, or may include the chip and another discrete component, such as a memory (or a storage module) and/or a transceiver (or a communication module).

For beneficial effects of the second aspect to the tenth aspect, refer to the descriptions of the beneficial effects in the part of the method shown in the first aspect.

### BRIEF DESCRIPTION OF DRAWINGS

FIG. 1 is a schematic architectural diagram of a wireless communication system according to an embodiment of this application;
FIG. 2A is a schematic diagram of a control plane protocol stack in L2 relay communication according to an embodiment of this application;
FIG. 2B is a schematic diagram of a user plane protocol stack in L2 relay communication according to an embodiment of this application;
FIG. 3 is a schematic architectural diagram of another wireless communication system according to an embodiment of this application;
FIG. 4 is a schematic flowchart of a communication method according to an embodiment of this application;
FIG. 5 is a schematic diagram of a configuration table applied to a first communication apparatus according to an embodiment of this application;
FIG. 6 is a schematic diagram of a configuration table applied to a second communication apparatus according to an embodiment of this application;
FIG. 7 is a schematic diagram of another configuration table applied to a second communication apparatus according to an embodiment of this application;
FIG. 8 is a schematic diagram of another configuration table applied to a second communication apparatus according to an embodiment of this application;
FIG. 9 is a schematic diagram of a structure of a communication apparatus according to an embodiment of this application;
FIG. 10 is a schematic diagram of a structure of a communication apparatus according to an embodiment of this application;
FIG. 11 is a schematic diagram of a structure of a communication apparatus according to an embodiment of this application; and
FIG. 12 is a schematic diagram of a structure of a communication apparatus according to an embodiment of this application.

### DESCRIPTION OF EMBODIMENTS

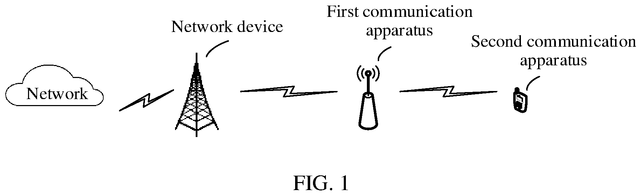

As shown in FIG. 1, the communication method provided in embodiments of this application may be applied to an L2 relay communication scenario. The L2 relay communication scenario shown in FIG. 1 may include a network device, a first communication apparatus, and a second communication apparatus. The network device may communicate with the second communication apparatus through relay of the first communication apparatus. Therefore, even if the second communication apparatus is outside radio signal coverage of the network device, the second communication apparatus may still communicate with the network device through the first communication apparatus. It should be understood that during implementation, the first communication apparatus may also be referred to as a relay terminal device (or a relay terminal), and the second communication apparatus may also be referred to as a remote (remote) terminal device (or a remote terminal).

In FIG. 1, the first communication apparatus may relay the second communication apparatus to the network device. For example, the first communication apparatus may be a terminal device, a communication apparatus having a relay function, such as a relay station or a road side unit (road site unit, RSU), or a chip in the communication apparatus. Alternatively, the first communication apparatus may be a communication chip having a communication module, a vehicle having a communication function, a vehicle-mounted device (for example, an in-vehicle communication apparatus or an in-vehicle communication chip), or the like.

The second communication apparatus may be a terminal device or a chip in a terminal device, and the second communication apparatus may have a wireless transceiver function. For example, the second communication apparatus can communicate (for example, communicate in a wireless manner) with one or more network devices in one or more communication systems, and receive a network service provided by the network device. The network device herein includes but is not limited to the network device shown in FIG. 1.

It should be understood that, the terminal device in this application may be, for example, user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, or a terminal agent.

The terminal device may further be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device, a terminal apparatus in a 5G network, a vehicle-to-everything (V2X) terminal device, a terminal apparatus in a future evolved PLMN network, or the like.

In addition, the terminal device may be deployed on land, where the deployment includes indoor or outdoor, or handheld or vehicle-mounted deployment, the terminal device may be deployed on water (for example, on a ship), or the terminal device may be deployed in air (for example, on an airplane, a balloon, or a satellite). The terminal device may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. It should be understood that, the terminal device in this application may further be a vehicle having a communication function, a vehicle-mounted device (for example, an in-vehicle communication apparatus or an in-vehicle communication chip), or the like.

For example, the first communication apparatus and the second communication apparatus may perform communication through a sidelink (sidelink, SL) interface (or referred to as a proximity-based services (proximity-based services, ProSe) interface or a direct communication (PC5) interface).

The network device is an access site of a mobile communication network, and may be configured to provide access to the mobile communication network. The mobile communication network may be NR or a future updated mobile network. The network device may be an access network device (or referred to as an access network site). The access network device is a device that provides a network access function, for example, a radio access network (radio access network, RAN) base station. The network device may be specifically an NR base station, a base station in a future evolved PLMN network, or the like. The network device may further include a relay station (relay device), a transmission point, a transmit point, a wireless access point, or the like. The network device may be a wearable device or a vehicle-mounted device. Alternatively, the network device may be a communication chip having a communication module.

For example, the first communication apparatus may access the network device through a universal user-to-network interface (universal user to network interface, Uu interface).

Based on the architecture shown in FIG. 1, communication between the network device and the first communication apparatus and communication between the first communication apparatus and the second communication apparatus may be separately performed by using a radio bearer. The radio bearer may include a data radio bearer (data radio bearer, DRB) and a signaling radio bearer (signaling radio bearer, SRB). The data radio bearer may be used to transmit data, and the signaling radio bearer may be used to transmit control plane signaling.

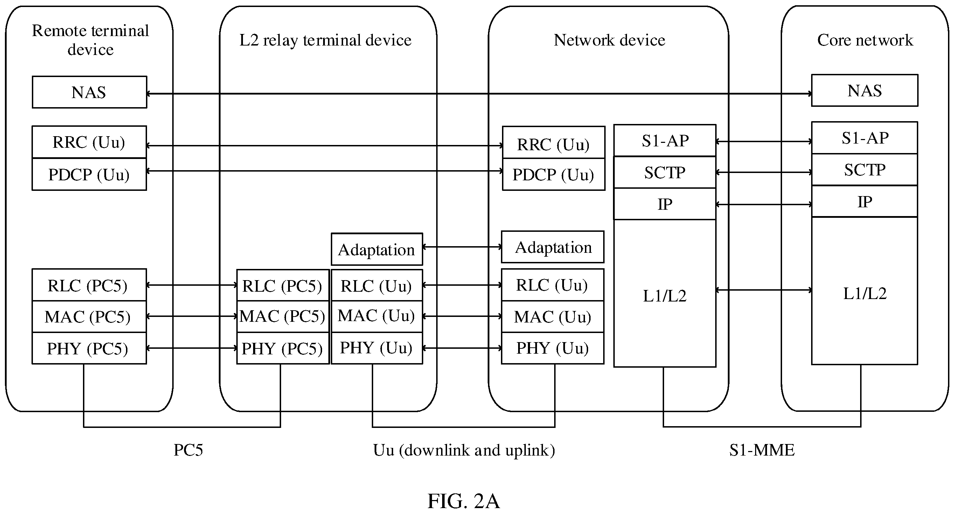

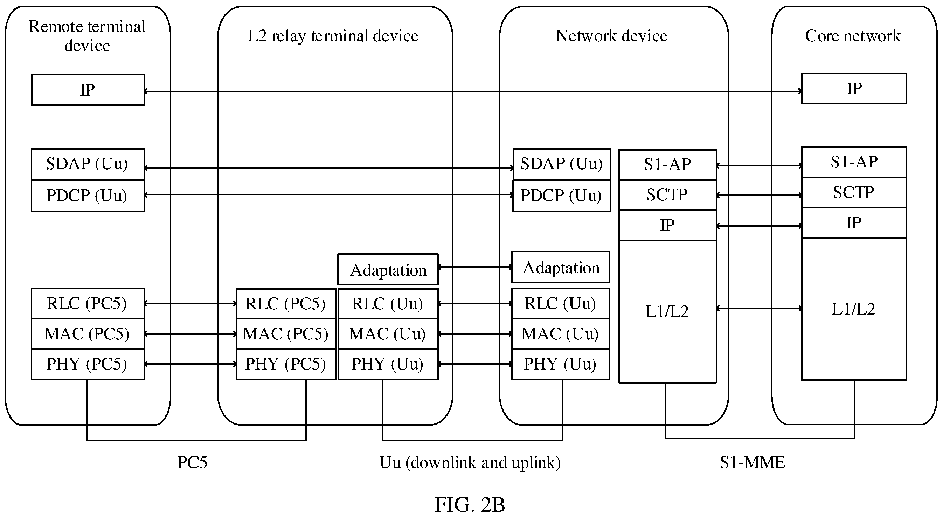

Control plane protocol stack architectures for communication among the network device, the first communication apparatus, and the second communication apparatus are shown in FIG. 2A and FIG. 2B. It can be learned that the network device and the second communication apparatus may separately perform communication by using an RRC entity of a Uu interface and a packet data convergence protocol (packet data convergence protocol, PDCP) entity of the Uu interface. Therefore, the second communication apparatus is visible to the network device, and reliability of relay communication can be improved. The PDCP entity may be configured to perform a function such as header compression of an internet protocol (internet protocol, IP) data packet, to compress a size of a transmitted data packet. For example, the network device sends data to the second communication apparatus. A header of the data is compressed by using a PDCP entity of the network device, and is decompressed by the second communication apparatus by using a corresponding PDCP entity, so that the second communication apparatus can obtain a header of a complete IP data packet for subsequent processing.

For example, schematic diagrams of a control plane protocol stack and a user plane protocol stack in the L2 relay scenario shown in FIG. 1 are respectively as shown in FIG. 2A and FIG. 2B. The following uses the user plane protocol stack as an example for specific description, and the control plane protocol stack may be understood with reference to this.

As shown in FIG. 2B, user plane radio bearers of Uu interfaces of the network device and the first communication apparatus each include a radio link control (radio link control, RLC) entity (entity) (and/or configuration). Optionally, the user plane radio bearer of the Uu interface may further include a medium access control (medium access control, MAC) entity (and/or configuration) and/or a physical (physical, PHY) layer entity (and/or configuration), and may optionally include an adaptation layer (adaptation layer, AL) entity (and/or configuration). Radio bearers of SL interfaces (or referred to as PC5 interfaces or ProSe interfaces) of the first communication apparatus and the second communication apparatus respectively include an RLC entity (and/or configuration), a MAC entity (and/or configuration), and a PHY entity (and/or configuration), and may optionally include an adaptation layer entity (and/or configuration). In addition, the control plane radio bearers of the Uu interfaces of the network device and the second communication apparatus each further include an RRC entity (and/or configuration), a NAS entity (and/or configuration), and a PDCP entity (and/or configuration). The control plane radio bearers of the Uu interfaces of the network device and the second communication apparatus each further include a PDCP entity (and/or configuration), and may optionally include a service data adaptation protocol (service data adaptation protocol, SDAP) entity. It should be understood that, radio bearers in this application may include entities and/or configurations of protocol layers (such as an RLC layer, a MAC layer, and a PHY layer). For ease of description, the entities of the protocol layers are used as an example for the following descriptions. However, it should not be understood that the radio bearers in this application include only the entities of the protocol layers, because the radio bearers may further include configurations of the protocol layers, or the radio bearers may include only configurations of the protocol layers.

As shown in FIG. 2B, at least one logical channel (logical channel, LCH) of a Uu interface is maintained between an RLC entity of the Uu interface of the network device and an RLC entity of the Uu interface of the first communication apparatus. At least one logical channel of an SL interface is maintained between the RLC entity of an SL interface of the first communication apparatus and an RLC entity of an SL interface of a remote terminal device.

It should be understood that the network device and the remote terminal device may further perform communication by using a plurality of paths (paths), to implement data duplication (duplication) transmission or data split (split) transmission, so that communication reliability and a data transmission rate can be improved. For example, the network device and the remote terminal device may perform communication by simultaneously using a plurality of paths formed by a plurality of relay devices. Alternatively, the network device and the remote terminal device may perform communication by using at least one relay device, and in addition, the network device and the remote terminal device may directly perform communication, for example, perform communication through a Uu interface.

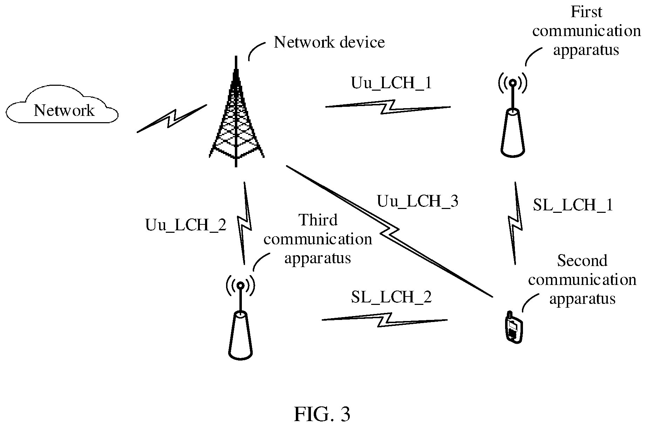

As shown in FIG. 3, the network device and the second communication apparatus may perform communication by using any one or more paths in a Uu interface between the second communication apparatus and the first communication apparatus, the third communication apparatus, or the network device. For example, in the architecture shown in FIG. 3, a logical channel of a Uu interface between the network device and the first communication apparatus may be represented as a Uu_LCH_1. The Uu_LCH_1 may be jointly maintained by an RLC entity (or an RLC entity and a MAC entity corresponding to the logical channel) of the Uu interface of the network device and an RLC entity (or an RLC entity and a MAC entity corresponding to the logical channel) of the Uu interface of the first communication apparatus. SL communication is used as an example. A logical channel of an SL interface between the first communication apparatus and the second communication apparatus may be represented as an SL_LCH_1. The SL_LCH_1 may be jointly maintained by an RLC entity (or an RLC entity and a MAC entity corresponding to the logical channel) of the SL interface of the first communication apparatus and an RLC entity (or an RLC entity and a MAC entity corresponding to the logical channel) of the SL interface of the second communication apparatus.

Similarly, the RLC entity of the Uu interface of the network device and an RLC entity of a Uu interface of the third communication apparatus jointly maintain a logical channel Uu_LCH_2. An RLC entity (or an RLC entity and a MAC entity corresponding to the logical channel) of an SL interface of the third communication apparatus and the RLC entity (or the RLC entity and a MAC entity corresponding to the logical channel) of the SL interface of the second communication apparatus jointly maintain a logical channel SL_LCH_2.

In addition, when the network device and the second communication apparatus perform communication through a Uu interface, the RLC entity (or the RLC entity and a MAC entity corresponding to a logical channel) of the Uu interface of the network device and the RLC entity (or the RLC entity and a MAC entity corresponding to a logical channel) of the Uu interface of the second communication apparatus jointly maintain a logical channel Uu_LCH_3.

It should be understood that, the network device and the second communication apparatus may further perform communication by using another path that is not shown in FIG. 3. This is not limited in this application. In addition, a quantity of paths for communication between the network device and the second communication apparatus through a Uu interface is not limited in this application. For example, the network device may configure a plurality of radio bearers of the second communication apparatus, and separately communicate with the second communication apparatus by using each radio bearer. In this case, each radio bearer may correspond to one path of the Uu interface between the network device and the second communication apparatus.

Based on the architecture shown in FIG. 1 or FIG. 3, an embodiment of this application provides a communication method, to improve efficiency of data transmission between the network device and the second communication apparatus in L2 relay communication. The communication method may be implemented by the network device, the first communication apparatus, and the second communication apparatus. The first communication apparatus may include a relay terminal device between the network device and the second communication apparatus, or a chip in the relay terminal device. In addition, the communication method may alternatively be performed by the network device, the first communication apparatus, the second communication apparatus, and the third communication apparatus. In this case, the first communication apparatus and the third communication apparatus each may be used as a relay terminal device between the network device and the second communication apparatus, or used as a chip in the relay terminal device. Therefore, based on the communication method provided in this application, the network device and the second communication apparatus may perform communication by using the first communication apparatus and/or the third communication apparatus.

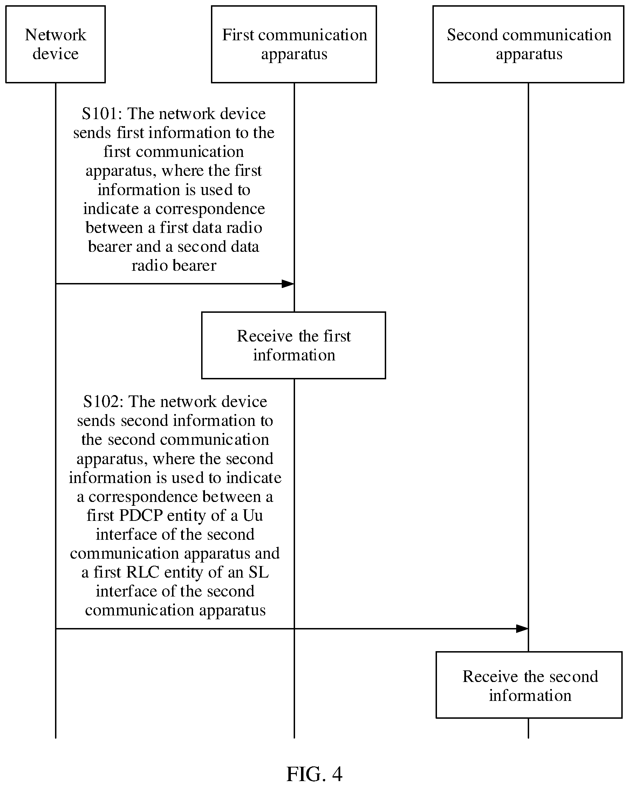

According to the claimed invention, the following describes steps included in the communication method provided in embodiments of this application with reference to FIG. 4. As shown in FIG. 4, the method includes the following steps.

S101: The network device sends first information to the first communication apparatus.

The first information is used to indicate a correspondence between a first data radio bearer and a second data radio bearer. The first data radio bearer is a data radio bearer between the network device and the first communication apparatus. For example, the first data radio bearer is a data radio bearer of a Uu interface between the network device and the first communication apparatus. The second data radio bearer is a data radio bearer between the first communication apparatus and the second communication apparatus. For example, the second data radio bearer is a data radio bearer of an SL interface between the first communication apparatus and the second communication apparatus.

Correspondingly, the first communication apparatus receives the first information.

S102: The network device sends second information to the second communication apparatus.

The second information is used to indicate a correspondence between a first PDCP entity of a Uu interface of the second communication apparatus and a first RLC entity of an SL interface of the second communication apparatus, and the first RLC entity corresponds to the second data radio bearer.

It should be understood that, that the first RLC entity corresponds to the second data radio bearer may mean that a data radio bearer of the first RLC entity of the second communication apparatus corresponds to the second data radio bearer of the first communication apparatus, or that a data radio bearer (for example, marked as an SL DRB ID1) of the first RLC entity and the second data radio bearer of the first communication apparatus maintain a same logical channel.

Correspondingly, the second communication apparatus receives the second information.

According to the foregoing method, the network device configures, for the first communication apparatus, the correspondence between the first data radio bearer and the second data radio bearer, so that the first communication apparatus learns that relay transmission between the network device and the second communication apparatus is performed by using the first data radio bearer and the second data radio bearer. In addition, the network device configures, for the second communication apparatus, the correspondence between the RLC entity of the SL interface corresponding to the second data radio bearer and the PDCP entity of the Uu interface, so that the second communication apparatus can efficiently determine the PDCP entity. The foregoing communication method improves data transmission efficiency of L2 relay communication.

It should be understood that, in this application, the first information may be sent to the first communication apparatus in a process of configuring the data radio bearer of the first communication apparatus. For example, the first information may be sent together with configuration information of the first data radio bearer and configuration information of the second data radio bearer. In addition, the first information may alternatively be sent in a process other than the process of configuring the data radio bearer of the first communication apparatus. This is not specifically limited in this application.

For example, the network device may configure respective data radio bearers of the first communication apparatus and the second communication apparatus. Specifically, for the first communication apparatus, the network device may separately configure the first data radio bearer and the second data radio bearer. For the second communication apparatus, the network device may configure a data radio bearer including the first RLC entity. The data radio bearer is a data radio bearer between the second communication apparatus and the first communication apparatus. The data radio bearer and the second data radio bearer of the first communication apparatus maintain a same logical channel.

Specifically, based on the protocol stack architecture shown in FIG. 2B, the first data radio bearer and the second data radio bearer that are configured by the network device for the first communication apparatus in this application do not include a PDCP entity. Specifically, the first data radio bearer and the second data bearer each may include an RLC entity, a MAC entity (or configuration), a PHY entity, and the like of an SL interface between the network device and the first communication apparatus, but do not include a PDCP entity. Similarly, a data radio bearer configured by the network device for the third communication apparatus in this application does not include a PDCP entity. Specifically, the data radio bearer configured by the network device for the third communication apparatus may include an RLC entity, a MAC entity, a PHY entity, and the like of the SL interface between the network device and the first communication apparatus, but does not include a PDCP entity.

In addition, based on the protocol stack architecture shown in FIG. 2B, a radio bearer configured by the network device for the second communication apparatus in this application may include an RLC entity (for example, the first RLC entity), a MAC entity, and a PHY entity of the SL interface between the second communication apparatus and the first communication apparatus. In addition, the radio bearer configured by the network device for the second communication apparatus may further include a PDCP entity of a Uu interface between the second communication apparatus and the network device. It should be understood that the data radio bearer configured by the network device for the second communication apparatus may further include an RRC entity and a NAS entity of a control plane, and may optionally include an SDAP entity of a user plane.

During implementation of S 101, the correspondence between the first data radio bearer and the second data radio bearer may be represented as a correspondence between an RLC entity that is of a Uu interface of the first communication apparatus and that is included in the first data radio bearer and an RLC entity that is of an SL interface of the first communication apparatus and that is included in the second data radio bearer.

In addition, the correspondence between the first data radio bearer and the second data radio bearer may be represented as a correspondence between a logical channel of a Uu interface corresponding to the first data radio bearer and a logical channel of an SL interface corresponding to the second data radio bearer. The logical channel of the Uu interface corresponding to the first data radio bearer is jointly maintained by an RLC entity of the Uu interface of the network device and the RLC entity that is of the Uu interface of the first communication apparatus and that is included in the first data radio bearer. As shown in FIG. 3, the logical channel of the Uu interface corresponding to the first data radio bearer is Uu_LCH_1. The logical channel of the SL interface corresponding to the second data radio bearer is jointly maintained by the RLC entity of the SL interface of the first communication apparatus and an RLC entity that is of the SL interface of the first communication apparatus and that is included in the second data radio bearer. As shown in FIG. 3, the logical channel of the SL interface corresponding to the second data radio bearer is SL_LCH_1.

The logical channel of the SL interface corresponding to the second data radio bearer may be indicated by an identifier of the logical channel in combination with one or more of a source identifier (source ID, SRC/SRC ID) (or a source identifier index), a destination identifier (destination ID, DST/DST ID) (or a destination identifier index), or a channel type (cast-type) identifier of the logical channel. The source identifier of the logical channel is an identifier of a terminal device that sends data through the logical channel, for example, an SL L2 ID, an SL L1 ID, or another UE identifier. The source identifier index may be used to indicate the source identifier of the logical channel, for example, may be an index value corresponding to the source identifier. The destination identifier of the logical channel is an identifier of an SL interface of a terminal device that receives data through the logical channel, for example, an SL L2 ID, an SL L1 ID, or another UE identifier. The destination identifier index may be used to indicate the destination identifier of the logical channel, for example, may be an index value corresponding to the destination identifier. The channel type identifier of the logical channel may be used to indicate that the logical channel is used for unicast, multicast, broadcast, or the like. In other words, in this embodiment of this application, the SL_LCH_1 and/or the SL_LCH_2 may be used to perform unicast, multicast, or broadcast communication.

As shown in FIG. 3, in a specific example, the correspondence between the logical channel (namely, the logical channel Uu_LCH_1 shown in FIG. 3) of the Uu interface corresponding to the first data radio bearer and the logical channel (namely, the logical channel SL_LCH_1 shown in FIG. 3) of the SL interface corresponding to the second data radio bearer may be used to represent the correspondence between the first data radio bearer and the second data radio bearer. The logical channel of the SL interface may be indicated by using the identifier of the logical channel and the source identifier and/or the destination identifier of the logical channel.

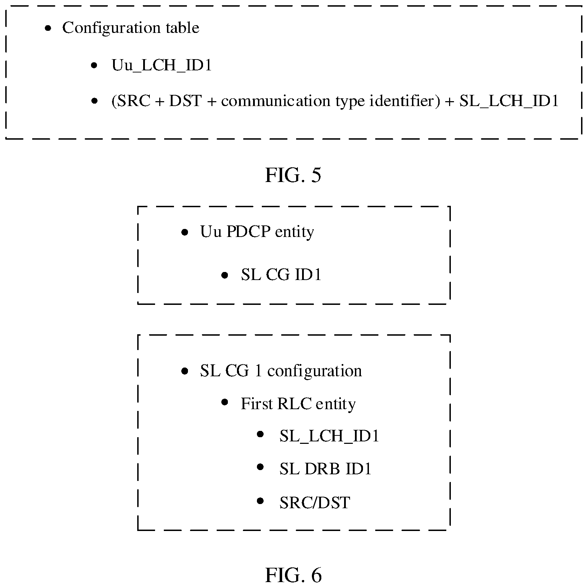

In this example, the first communication apparatus may store a configuration table (or referred to as a routing table (routing table)) shown in FIG. 5, to store the correspondence. According to FIG. 5, the configuration table may include any one or more of an identifier (for example, a Uu_LCH_ID1) of the logical channel Uu_LCH_1 between the network device and the first communication apparatus, an identifier (for example, an SL_LCH_ID1) of the logical channel SL_LCH_1, a source identifier or a destination identifier of the logical channel SL_LCH_1, and a communication type identifier (for example, unicast, multicast, or broadcast), to indicate the correspondence between the first data radio bearer and the second data radio bearer. The first information may be configuration information corresponding to the configuration table, and the first information may carry any one or more of the identifier of the logical channel Uu_LCH_1, the identifier of the logical channel SL_LCH_1, and the source identifier or the destination identifier of the logical channel SL_LCH_1. It should be understood that (SRC + DST + communication type identifier) shown in FIG. 5 means that some or all of the SRC, the DST, or the communication type identifier may be carried, and it is not necessary to carry all of the SRC, the DST, and the communication type identifier.

Similarly, if the network device performs L2 relay transmission with the second communication apparatus by using a plurality of relay terminal devices, where the plurality of relay terminal devices are connected in a head-to-tail manner, the network device may configure, for each relay terminal device, a correspondence between a data radio bearer used by the relay terminal device to receive data and a data radio bearer used by the relay terminal device to send the data to a next terminal device, to improve data transmission reliability and transmission efficiency.

In addition, the correspondence between the first PDCP entity of the Uu interface of the second communication apparatus and the first RLC entity of the SL interface of the second communication apparatus shown in S102 may be represented as a correspondence between the first PDCP entity of the Uu interface of the second communication apparatus and a logical channel maintained by the first RLC entity.

The second communication apparatus may store, based on the second information, a correspondence between the first PDCP entity and the first RLC entity and/or the logical channel maintained by the first RLC entity. For example, the second communication apparatus may configure information about the first RLC entity in the first PDCP entity based on the second information, to bind the first PDCP entity of the Uu interface and the first RLC entity of the SL interface. Specifically, the architecture shown in FIG. 3 is still used as an example. For a solution in which the network device performs transmission with the second communication apparatus by using the first communication apparatus, the second information may be used to configure a configuration table shown in FIG. 6. It can be learned that, based on the second information, the second communication apparatus may perform SL cell group (cell group, CG) configuration in a PDCP entity configuration of the Uu interface of the second communication apparatus. For example, the SL cell group configuration may be marked as an SL CG ID1. The second communication apparatus may further store the information about the first RLC entity in a configuration corresponding to the SL CG ID1. For example, the second communication apparatus stores, in the configuration corresponding to the SL CG ID1, at least one of the following information: an identifier (for example, the SL DRB ID1) of the data radio bearer of the first RLC entity, the identifier of the logical channel SL_LCH_1 maintained by the first RLC entity, or the source identifier or the destination identifier of the logical channel SL_LCH_1, to indicate that the first PDCP entity of the Uu interface of the second communication apparatus corresponds to the first RLC entity of the SL interface.

It should be understood that the first information may be carried in RRC signaling sent by the network device to the first communication apparatus, or may be carried in each data packet that is sent by the network device to the first communication apparatus and that needs to be relayed to the second communication apparatus, to flexibly configure the correspondence. In addition, the second information may be carried in RRC signaling sent by the network device to the second communication apparatus, or may be carried in each data packet that is sent by the network device to the second communication apparatus by using the first communication apparatus, to flexibly configure the correspondence.

In a possible example, if the network device separately communicates with the second communication apparatus by using the first communication apparatus and the third communication apparatus, the network device may further send third information to the third communication apparatus, where the third information is used to indicate a correspondence between a third data radio bearer and a fourth data radio bearer. The third data radio bearer is a data radio bearer between the network device and the third communication apparatus, and the fourth data radio bearer is a data radio bearer between the third communication apparatus and the second communication apparatus. In addition, the network device may further send fourth information to the second communication apparatus, where the fourth information is used to indicate a correspondence between the first PDCP entity of the Uu interface of the second communication apparatus and a second RLC entity of the SL interface of the second communication apparatus, and the second RLC entity corresponds to the fourth data radio bearer.

In the foregoing example, the first PDCP entity of the Uu interface of the second communication apparatus is associated with both the first RLC entity and the second RLC entity of the SL interface of the second communication apparatus. Therefore, a same PDCP entity of the Uu interface may process data of a plurality of RLC entities of the SL interface. This makes it possible to introduce duplication transmission and split transmission in the L2 relay communication.

For example, the network device may further configure the third data radio bearer and the fourth data radio bearer for the third communication apparatus. The third data radio bearer does not include a PDCP entity of the third communication apparatus, and the fourth data radio bearer does not include the PDCP entity of the third communication apparatus.

It should be understood that, for an indication manner of the correspondence between the third data radio bearer and the fourth data radio bearer, refer to an indication manner of the correspondence between the first data radio bearer and the second data radio bearer in this application. The architecture shown in FIG. 3 is used as an example. The third information may carry any one or more of an identifier of the logical channel Uu_LCH_2 of the Uu interface, an identifier of the logical channel SL_LCH_2 of the SL interface, and a source identifier or a destination identifier of the logical channel SL_LCH_2, to indicate the correspondence between the third data radio bearer and the fourth data radio bearer.

In addition, for an indication manner of the correspondence between the first PDCP entity of the Uu interface of the second communication apparatus and the second RLC entity of the SL interface of the second communication apparatus, refer to an indication manner of the correspondence between the first PDCP entity of the Uu interface of the second communication apparatus and the first RLC entity of the SL interface of the second communication apparatus in this application. The architecture shown in FIG. 3 is used as an example. The fourth information may carry any one or more of an identifier of the first PDCP entity, the identifier of the logical channel SL_LCH_2 of the SL interface, and the source identifier or the destination identifier of the logical channel SL_LCH_2, to indicate the correspondence between the first PDCP entity and the second RLC entity.

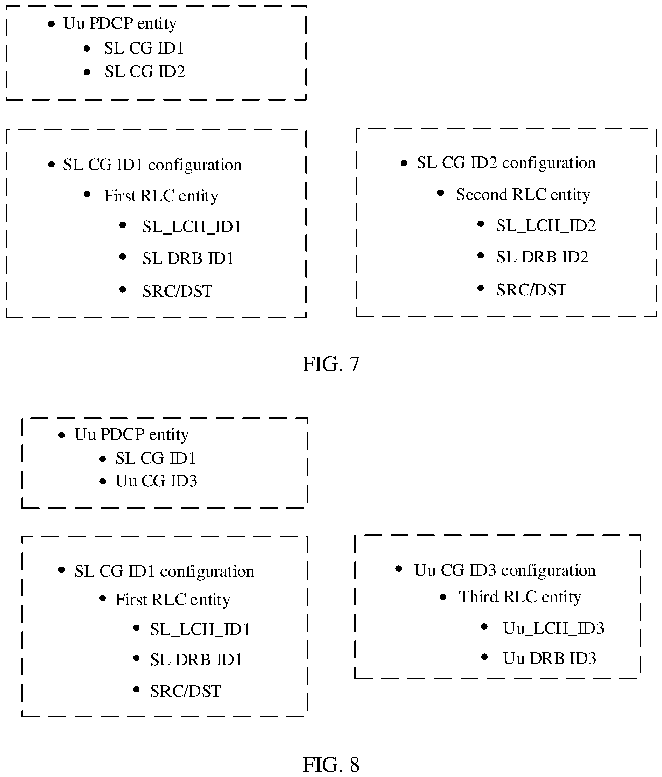

For example, if the second communication apparatus receives the second information and the fourth information from the network device, the second communication apparatus may configure a configuration table shown in FIG. 7 based on the second information and the fourth information. The second communication apparatus may perform SL cell group configuration in the PDCP entity configuration of the Uu interface of the second communication apparatus. The cell group configuration that is set based on the second information is marked as the SL CG ID1. For content configured in the SL CG ID1, refer to descriptions of FIG. 6 in this application. In addition, the second communication apparatus may configure an SL CG ID2 based on the fourth information. As shown in FIG. 7, a configuration of the SL CG ID2 may store at least one of the following information: an identifier (for example, the SL DRB ID2) of the data radio bearer of the second RLC entity, the identifier (for example, an SL_LCH_ID2) of the logical channel SL_LCH_2 maintained by the second RLC entity, or the source identifier or the destination identifier of the logical channel SL_LCH_2, to indicate that the first PDCP entity of the Uu interface of the second communication apparatus corresponds to the first RLC entity of the SL interface. It can be learned from FIG. 7 that the PDCP entity of the Uu interface of the second communication apparatus is associated with two RLC entities of the SL interface.

The third information may be carried in RRC signaling sent by the network device to the third communication apparatus, or the third information may be carried in each data packet that is sent by the network device to the third communication apparatus and that needs to be relayed to the second communication apparatus, to flexibly configure the correspondence. In addition, the fourth information may be carried in RRC signaling sent by the network device to the second communication apparatus, or the fourth information may be carried in each data packet that is sent by the network device to the second communication apparatus by using the third communication apparatus, to flexibly configure the correspondence.

It should be understood that, in this application, the third information may be sent to the first communication apparatus in a process of configuring the data radio bearer of the third communication apparatus. For example, the third information may be sent together with configuration information of the third data radio bearer and configuration information of the fourth data radio bearer. In addition, the third information may alternatively be sent in a process other than the process of configuring the data radio bearer of the third communication apparatus. This is not specifically limited in this application.

As shown in FIG. 3, when the network device and the second communication apparatus separately perform data transmission by using the first communication apparatus and the third communication apparatus, according to the communication method provided in this embodiment of this application, the network device may indicate the correspondence between the Uu_LCH_1 and the SL_LCH_1 to the first communication apparatus by using the first information, and indicate the correspondence between the first PDCP entity of the Uu interface and the first RLC entity of the SL interface to the second communication apparatus by using the second information. The first RLC entity is configured to maintain the SL_LCH_1. The network device may further indicate a correspondence between the Uu_LCH_2 and the SL_LCH_2 to the third communication apparatus by using the third information, and indicate the correspondence between the first PDCP entity of the Uu interface and the second RLC entity of the SL interface to the second communication apparatus by using the fourth information. The second RLC entity is configured to maintain the SL_LCH_2, for example, process data received through the Uu_LCH_2.

A downlink data transmission process is used as an example. During duplication transmission, the network device first duplicates, into two copies, a data packet that needs to be sent, and sends the 1^{st} data packet in the two copies to the first communication apparatus through the Uu_LCH_1. The first communication apparatus sends the 1^{st} data packet to the second communication apparatus through the SL_LCH_1 based on the correspondence between the Uu_LCH_1 and the SL_LCH_1. The first RLC entity of the second communication apparatus receives the 1^{st} data packet through the SL_LCH_1. In addition, the network device further sends the 2^{nd} data packet in the two copies to the third communication apparatus through the Uu_LCH_2. The first communication apparatus sends the 2^{nd} data packet to the second communication apparatus through the SL_LCH_2. The second RLC entity of the second communication apparatus receives the 2^{nd} data packet through the SL_LCH_2. Subsequently, the second communication apparatus may deliver, to the first PDCP entity for processing, the 1^{st} data packet received through the SL_LCH_1 and the 1^{st} data packet received through the SL_LCH_2. The first PDCP entity performs data packet duplication detection and reordering based on the 1^{st} data packet and the 2^{nd} data packet, for example, obtains a complete and sorted data packet based on the 1^{st} data packet and the 2^{nd} data packet, and then submits the data packet to an upper layer of the second communication apparatus for processing as required. During duplication transmission, the second communication apparatus separately receives the same data packet by using the first communication apparatus and the third communication apparatus. Therefore, transmission reliability of the data packet can be improved.

During split transmission, the network device first splits, into two copies, a data packet that needs to be sent, and sends the 1^{st} data packet in the two copies to the first communication apparatus through the Uu_LCH_1. The first communication apparatus sends the 1^{st} data packet to the second communication apparatus through the SL_LCH_1 based on the correspondence between the Uu_LCH_1 and the SL_LCH_1. The first RLC entity of the second communication apparatus receives the 1^{st} data packet through the SL_LCH_1. In addition, the network device further sends the 2^{nd} data packet in the two copies to the third communication apparatus through the Uu_LCH_2. The first communication apparatus sends the 2^{nd} data packet to the second communication apparatus through the SL_LCH_2. The second RLC entity of the second communication apparatus receives the 2^{nd} data packet through the SL_LCH_2. Subsequently, the second communication apparatus may deliver, to the first PDCP entity for processing, the 1^{st} data packet received through the SL_LCH_1 and the 2^{nd} data packet received through the SL_LCH_2. The first PDCP entity performs data packet duplication detection and reordering based on the 1^{st} data packet and the 2^{nd} data packet, for example, combines the 1^{st} data packet and the 2^{nd} data packet to obtain a complete and sorted data packet, and then submits the data packet to an upper layer of the second communication apparatus for processing as required. During split transmission, the second communication apparatus separately receives different data packets by using the first communication apparatus and the third communication apparatus, to reduce a length of a data packet transmission queue. Therefore, transmission efficiency of the data packet can be improved, and a transmission rate can be increased.

During uplink transmission, the terminal may duplicate (which corresponds to the duplication transmission) or split (which corresponds to the split transmission) data that needs to be transmitted, and separately send the data through the SL_LCH_1 and the SL_LCH_2. The first communication apparatus sends the data from the SL_LCH_1 to the network device through the Uu_LCH_1, and the second communication apparatus sends the data from the SL_LCH_2 to the network device through the Uu_LCH_2. Then, the network device combines the data from the Uu_LCH_1 and the data from the Uu_LCH_2.

It should be understood that, in the foregoing process of duplication transmission and/or split transmission, the network device may separately send data packets to the first communication apparatus and the third communication apparatus through the Uu interface in a unicast manner. A data packet sent to each communication apparatus may be scrambled by using an identifier (for example, a cell radio network temporary identifier (cell radio network temporary identifier, C-RNTI)) of the communication apparatus. The network device may alternatively send the data packets in a multicast manner. For example, in the duplication transmission, the network device may use the first communication apparatus and the third communication apparatus as a communication apparatus group, and send data packets to the communication apparatus group. The data packets sent in the multicast manner are scrambled by using a group identifier (for example, a group radio network temporary identifier (group-radio network temporary identifier, G-RNTI)) of the communication apparatus group. In the split transmission, the network device may use the first communication apparatus as a communication apparatus group and use the third communication apparatus as another communication apparatus group, to separately send different data packets to the first communication apparatus and the third communication apparatus in the multicast manner. In addition, in the solution of transmitting data in the multicast manner, the Uu_LCH_1 and/or the Uu_LCH_2 used by the network device to transmit data may be multicast logical channels/a multicast logical channel. In addition, the network device may alternatively send data through the Uu interface in a broadcast manner.

In another possible example, if the network device separately communicates with the second communication apparatus by using the first communication apparatus and the Uu interface between the network device and the second communication apparatus, the network device may further send fifth information to the second communication apparatus, where the fifth information may be used to indicate a correspondence between the first PDCP entity of the Uu interface of the second communication apparatus and a third RLC entity of the Uu interface of the second communication apparatus. The third RLC entity corresponds to a fifth data radio bearer of the second communication apparatus, and the fifth data radio bearer is used by the second communication apparatus to communicate with the network device through the Uu interface.

For an indication manner of the correspondence between the first PDCP entity of the Uu interface of the second communication apparatus and the third RLC entity of the Uu interface of the second communication apparatus, refer to the indication manner of the correspondence between the first PDCP entity of the Uu interface of the second communication apparatus and the first RLC entity of the SL interface of the second communication apparatus in this application. The architecture shown in FIG. 3 is used as an example. The fifth information may carry the identifier of the first PDCP entity, and carry an identifier of a logical channel Uu_LCH_3 of the Uu interface and/or an identifier (for example, a Uu DRB ID1) of a data radio bearer of a Uu interface corresponding to the third RLC entity, to indicate the correspondence between the third data radio bearer and the fourth data radio bearer.

For example, if the second communication apparatus receives the second information and the fifth information from the network device, the second communication apparatus may configure a configuration table shown in FIG. 8 based on the second information and the fifth information. The second communication apparatus may perform SL cell group configuration in the PDCP entity configuration of the Uu interface of the second communication apparatus. The cell group configuration that is set based on the second information is marked as the SL CG ID1. For content configured in the SL CG ID1, refer to descriptions of FIG. 6 in this application. In addition, the second communication apparatus may configure an SL CG ID3 based on the fifth information. As shown in FIG. 8, the configuration of the SL CG ID3 may store an identifier (for example, a Uu DRB ID3) of a data radio bearer of the third RLC entity and/or store an identifier (for example, a Uu_LCH_ID3) of the logical channel Uu_LCH_3 maintained by the third RLC entity, to indicate that the first PDCP entity of the Uu interface of the second communication apparatus corresponds to the third RLC entity of the Uu interface. It can be learned from FIG. 8 that the PDCP entity of the Uu interface of the second communication apparatus is separately associated with an RLC entity of the SL interface and an RLC entity of the Uu interface.

The fifth information may be carried in RRC signaling sent by the network device to the second communication apparatus, or the fifth information may be carried in each data packet that is sent by the network device to the second communication apparatus through the Uu interface, to flexibly configure the correspondence.

In this example, the network device may separately transmit data to the second communication apparatus by using the first communication apparatus and the Uu interface. Therefore, duplication sending and/or split sending of the data can be implemented based on the architecture.

As shown in FIG. 3, when the network device and the second communication apparatus separately perform data transmission through relay of the first communication apparatus and the Uu interface, according to the communication method provided in this embodiment of this application, the network device may indicate the correspondence between the Uu_LCH_1 and the SL_LCH_1 to the first communication apparatus by using the first information, and indicate the correspondence between the first PDCP entity of the Uu interface and the first RLC entity of the SL interface to the second communication apparatus by using the second information. The first RLC entity is configured to maintain the SL_LCH_1. The network device may further indicate the correspondence between the first PDCP entity of the Uu interface and the third RLC entity of the Uu interface to the second communication apparatus by using the fifth information. The third RLC entity is configured to maintain the Uu_LCH_3, for example, process data received through the Uu_LCH_3.

A downlink data transmission process is used as an example. During duplication transmission, the network device first duplicates, into two copies, a data packet that needs to be sent, and sends the 1^{st} data packet in the two copies to the first communication apparatus through the Uu_LCH_1. The first communication apparatus sends the 1^{st} data packet to the second communication apparatus through the SL_LCH_1 based on the correspondence between the Uu_LCH_1 and the SL_LCH_1. The first RLC entity of the second communication apparatus receives the 1^{st} data packet through the SL_LCH_1. In addition, the network device further sends the 2^{nd} data packet in the two copies to the second communication apparatus through the Uu_LCH_3. The third RLC entity of the second communication apparatus receives the 2^{nd} data packet through the Uu_LCH_3. Subsequently, the second communication apparatus may deliver, to the first PDCP entity for processing, the 1^{st} data packet received through the SL_LCH_1 and the 1^{st} data packet received through the Uu_LCH_3. The first PDCP entity performs data packet duplication detection and reordering based on the 1^{st} data packet and the 2^{nd} data packet, for example, obtains a complete and sorted data packet based on the 1^{st} data packet and the 2^{nd} data packet, and then submits the data packet to an upper layer of the second communication apparatus for processing as required. During duplication transmission, the second communication apparatus separately receives the same data packet through relay of the first communication apparatus and the Uu interface, so that a probability of a packet loss of the same data packet is reduced. Therefore, transmission reliability of the data packet can be improved.

During split transmission, the network device first splits, into two copies, a data packet that needs to be sent, and sends the 1^{st} data packet in the two copies to the first communication apparatus through the Uu_LCH_1. The first communication apparatus sends the 1^{st} data packet to the second communication apparatus through the SL_LCH_1 based on the correspondence between the Uu_LCH_1 and the SL_LCH_1. The first RLC entity of the second communication apparatus receives the 1^{st} data packet through the SL_LCH_1. In addition, the network device further sends the 2^{nd} data packet to the second communication apparatus through the Uu_LCH_3. The third RLC entity of the second communication apparatus receives the 2^{nd} data packet through the Uu_LCH_3. Subsequently, the second communication apparatus may deliver, to the first PDCP entity for processing, the 1^{st} data packet received through the SL_LCH_1 and the 2^{nd} data packet received through the Uu_LCH_3. The first PDCP entity performs data packet duplication detection and reordering based on the 1^{st} data packet and the 2^{nd} data packet, for example, combines the 1^{st} data packet and the 2^{nd} data packet to obtain a complete and sorted data packet, and then submits the data packet to an upper layer of the second communication apparatus for processing as required. During split transmission, the second communication apparatus separately receives different data packets through relay of the first communication apparatus and the Uu interface, to reduce a length of a data packet transmission queue. Therefore, transmission efficiency of the data packet can be improved, and a transmission rate can be increased.

During uplink transmission, the terminal may duplicate (which corresponds to the duplication transmission) or split (which corresponds to the split transmission) data that needs to be transmitted, and separately send the data through the SL_LCH_1 and the Uu_LCH_3. The first communication apparatus sends the data from the SL_LCH_1 to the network device through the Uu_LCH_1. Then, the network device combines the data from the Uu_LCH_1 and the data from the Uu_LCH_3.

In another communication method provided in an embodiment of this application, as shown in FIG. 1 or FIG. 3, if the network device can communicate with the second communication apparatus through relay of the first communication apparatus, the second communication apparatus may include an indication in data sent to the first communication apparatus, so that the first communication apparatus determines whether the data needs to be sent to the network device.

For example, the second communication apparatus may fill in different source identifiers and/or fill in a same source identifier but different destination identifiers for data that is sent to the first communication apparatus but does not need to be sent to the network device and for data that is sent to the first communication apparatus and needs to be forwarded by the first communication apparatus to the network device. For example, as shown in Table 1, when the data from the second communication apparatus carries a source identifier SRC1, it indicates that the data needs to be relayed to the network device, and the first communication apparatus may send the data to the network device. When the data from the second communication apparatus carries a source identifier SRC2, it indicates that the data does not need to be relayed to the network device, and the first communication apparatus does not need to send the data to the network device. In this case, the first communication apparatus may submit the data to an upper layer for processing.

**Table 1**

| Index | Source identifier | Destination identifier | Whether data needs to be sent to a network device |
|---|---|---|---|
| #1 | SRC1 | - | Yes |
| #2 | SRC2 | - | No |
| #3 | SRC3 | DST1 | Yes |
| #4 | SRC3 | DST2 | No |

It should be understood that, in a process of establishing a connection between the first communication apparatus and the second communication apparatus, the first communication apparatus and the second communication apparatus may negotiate a correspondence between the source identifier and/or the destination identifier and a determining result of whether the data needs to be relayed to the network device that are shown in Table 1, to reach a consensus. Specifically, a plurality of (for example, two) unicast connections may be established between the first communication apparatus and the second communication apparatus. In a process of establishing each unicast connection, the first communication apparatus and the second communication apparatus may negotiate a group of source identifiers and/or destination identifiers corresponding to data that needs to be uploaded to the network device. For example, in a process of establishing a first unicast connection between the first communication apparatus and the second communication apparatus, the first communication apparatus and the second communication apparatus exchange a source identifier and/or a destination identifier (for example, the source identifier and/or the destination identifier shown by #1 and/or #3 in Table 1) that need/needs to be sent to the network device; and the second communication apparatus and the second communication apparatus negotiate a source identifier and/or a destination identifier (for example, the source identifier and/or the destination identifier shown by #2 and/or #4 in Table 1) that do/does not need to be sent to the network device.

In addition, in the architecture shown in FIG. 3, if the second communication apparatus is connected to the network device through relay of the first communication apparatus (or the third communication apparatus) and the Uu interface, when requesting an uplink transmission grant (UL grant) from the network device, the second communication apparatus may send a buffer status report (buffer status report, BSR) to the network device in the following manners.

Manner 1: The second communication apparatus reports an uplink BSR to the network device through the Uu interface between the second communication apparatus and the network device, where the uplink BSR is used to request the uplink transmission grant.

In the manner 1, after receiving the uplink BSR through the Uu interface, the network device may determine, based on a decision of the network device, how to send the uplink transmission grant to the second communication apparatus. Specifically, the network device may send the uplink transmission grant to the second communication apparatus through the Uu interface between the network device and the second communication apparatus. Alternatively, the network device may send an SL transmission grant to the second communication apparatus by using the first communication apparatus, where the SL transmission grant may be used for the second communication apparatus to send data to the first communication apparatus. In addition, the network device may send an uplink transmission grant to the first communication apparatus, where the uplink transmission grant is used for the first communication apparatus to send the data from the second communication apparatus to the network device on an uplink.

Manner 2: The second communication apparatus reports an SL BSR to the network device through the Uu interface between the second communication apparatus and the network device, where the SL BSR is used to request an SL transmission grant, and the SL transmission grant is used for the second communication apparatus to send data to the first communication apparatus. In addition, the second communication apparatus may explicitly or implicitly indicate that the data needs to be relayed to the network device.

In the manner 2, the network device may send the SL transmission grant to the second communication apparatus by using the first communication apparatus, where the SL transmission grant may be used for the second communication apparatus to send data to the first communication apparatus. In addition, the network device may send an uplink transmission grant to the first communication apparatus, where the uplink transmission grant is used for the first communication apparatus to send the data from the second communication apparatus to the network device on an uplink.

The SL BSR may carry indication information used to indicate that data corresponding to the SL BSR needs to be relayed to the network device. Alternatively, the second communication apparatus may include specific information in the SL BSR, so that the network device determines that the data corresponding to the SL BSR needs to be relayed to the network device. For example, a DST L2 Id carried in the SL BSR is an address (for example, DST1) in Table 1 that indicates that the data needs to be sent to the network device, so that the network device learns, based on the address, that the data needs to be relayed to the network device. The network device may learn, based on the information reported by the first communication apparatus, that when the SL BSR carries the specific information, it indicates that the data corresponding to the SL BSR needs to be relayed to the network device. Alternatively, the network device may obtain, from a core network element such as a mobility management entity (mobility management entity, MME) or an access and mobility management function (access and mobility management function, AMF), an address (for example, DST1) in Table 1 that indicates that the data needs to be sent to the network device. These network elements may obtain the address from the first communication apparatus and/or the second communication apparatus by using RRC signaling.

Manner 3: The second communication apparatus reports an SL BSR to the network device through the Uu interface between the second communication apparatus and the network device, where the SL BSR is used to request an SL transmission grant, and the SL transmission grant is used for the second communication apparatus to send data to the first communication apparatus. In addition, the second communication apparatus may explicitly or implicitly indicate that the data does not need to be relayed to the network device.

In the manner 3, the network device may send the SL transmission grant to the second communication apparatus by using the first communication apparatus, where the SL transmission grant is only used for the second communication apparatus to send data to the first communication apparatus.

In this example, when the second communication apparatus needs to transmit data to the first communication apparatus, and the first communication apparatus does not need to deliver the data to the network device, the second communication apparatus may report an SL BSR to the network device, and indicate that the data does not need to be relayed to the network device. For example, the SL BSR may carry indication information used to indicate that data corresponding to the SL BSR does not need to be relayed to the network device. Alternatively, the SL BSR may carry specific information used for the network device to determine that the data corresponding to the SL BSR does not need to be relayed to the network device. The specific information may include a specific DST L2 Id. For a specific manner of setting the SL BSR, refer to the manner of setting the SL BSR when it indicates that the data needs to be relayed to the network device in the manner 2.

In this application, after the network device receives the BSR from the second communication apparatus through the Uu interface, or receives the BSR from the second communication apparatus through relay of the first communication apparatus, the network device may send the transmission grant to the second communication apparatus in the following manners.

Manner 1: The network device may send an uplink transmission grant to the second communication apparatus through the Uu interface or relay of the second communication apparatus, where the uplink transmission grant may be used for the second communication apparatus to send uplink data to the network device through the Uu interface.

Manner 2: The network device may send an SL transmission grant to the second communication apparatus through the Uu interface or relay of the second communication apparatus, where the SL transmission grant is only used for the second communication apparatus to send data to the first communication apparatus through the SL interface. In addition, the first communication apparatus requests an uplink grant from the network device, where the uplink grant is used for the first communication apparatus to relay data from the second communication apparatus to the network device.

Manner 3: The network device may send an SL transmission grant and an uplink transmission grant to the second communication apparatus through the Uu interface, where the SL transmission grant is used for the second communication apparatus to send data to the first communication apparatus through the SL interface, and the uplink transmission grant is used for the first communication apparatus to relay the data to the network device. The uplink transmission grant may be limited to being only used to relay, to the network device, data that is transmitted between the first communication apparatus and the second communication apparatus through the SL interface. For example, the network device sends the SL transmission grant and the uplink transmission grant to the second communication apparatus by using downlink control information (download control information, DCI). If the uplink transmission grant is limited to being only used to relay, to the network device, data that is transmitted between the first communication apparatus and the second communication apparatus through the SL interface, the second communication apparatus may send the uplink transmission grant to the first communication apparatus.

Manner 4: The network device may send an SL transmission grant to the second communication apparatus through the Uu interface, and send an uplink grant to the first communication apparatus through the Uu interface. The uplink grant may be limited to being only used to relay, to the network device, data that is transmitted between the first communication apparatus and the second communication apparatus through the SL interface, for example, data that carries the identifier shown by #1 or #3 in Table 1.

Manner 5: The network device may send an SL transmission grant to the second communication apparatus. The SL transmission grant may continue to use an existing SL transmission grant manner. The SL transmission grant may be limited to being only used for data transmission between the first communication apparatus and the second communication apparatus through the SL interface.

It should be understood that, for a BSR that is sent by the second communication apparatus to the network device through the Uu interface, or for a BSR that is sent to the network device through relay of the first communication apparatus and that carries an identifier (for example, the identifier shown by #1 or #3 in Table 1) indicating that the data needs to be relayed to the network device, the network device may perform uplink grant in any one of the manner 1 to the manner 4. For a BSR that is sent to the network device through relay of the first communication apparatus and that carries an identifier (for example, the identifier shown by #2 or #4 in Table 1) indicating that the data does not need to be relayed to the network device, the network device may perform SL grant in the manner 5.

In the foregoing embodiments provided in this application, the method provided in embodiments of this application, namely, the procedure of the method, is described from perspectives of the functions implemented by the network device, the first communication apparatus, the second communication apparatus, and the third communication apparatus. To implement the functions in the method provided in embodiments of this application, the network device, the first communication apparatus, the second communication apparatus, and the third communication apparatus may include a hardware structure and/or a software module, to implement the foregoing functions in a form of the hardware structure, the software module, or a combination of the hardware structure and the software module. Whether a specific function in the foregoing functions is performed by the hardware structure, the software module, or the combination of the hardware structure and the software module depends on specific applications and design constraints of the technical solutions.

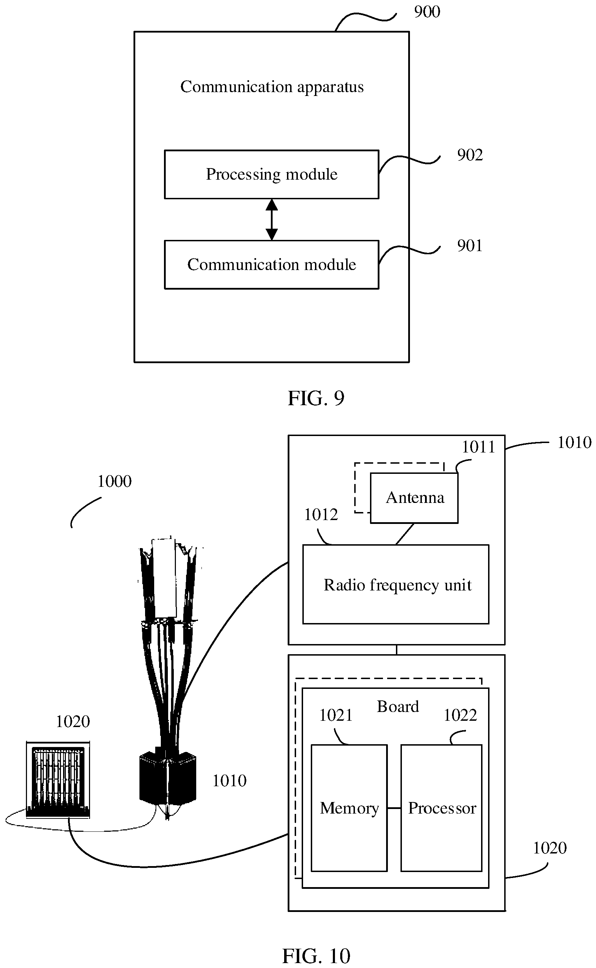

As shown in FIG. 9, a communication apparatus provided in an embodiment of this application may include a communication module 901 and a processing module 902. The communication module 901 and the processing module 902 are coupled to each other. The communication apparatus 900 may be configured to perform steps performed by the network device in the foregoing method embodiments. The communication module 901 may be configured to support the communication apparatus 900 in performing communication. The communication module 901 may also be referred to as a communication unit, a communication interface, a transceiver module, or a transceiver unit. The communication module 901 may have a wireless communication function, for example, can communicate with another communication apparatus in a wireless communication manner. The processing module 902 may also be referred to as a processing unit, and may be configured to support the communication apparatus 900 in performing processing actions of the network device in the foregoing method embodiments, including but not limited to: generating information or a message sent by the communication module 901, demodulating and decoding a signal received by the communication module 901, and the like.

When performing the steps performed by the network device in the foregoing method embodiments, the communication module 901 may be configured to perform sending and/or receiving actions of the network device in the foregoing method embodiments. The processing module 902 may be configured to perform a processing action of the network device in the foregoing method embodiments, for example, configured to control the communication module 901 to receive and/or send information, a message, or signaling, store the information, and the like.

Specifically, the communication module 901 may be configured to send first information to a first communication apparatus. The first information may indicate a correspondence between a first data radio bearer and a second data radio bearer, the first data radio bearer is a data radio bearer between the network device and the first communication apparatus, and the second data radio bearer is a data radio bearer between the first communication apparatus and a second communication apparatus. The communication module 901 may be further configured to send second information to the second communication apparatus, where the second information may indicate a correspondence between a first PDCP entity of a Uu interface of the second communication apparatus and a first RLC entity of an SL interface of the second communication apparatus, and the first RLC entity corresponds to the second data radio bearer.

For example, the first information may include a source identifier of the second data radio bearer and/or a destination identifier of the second data radio bearer.

The first data radio bearer does not include a PDCP entity of the first communication apparatus, and the second data radio bearer does not include the PDCP entity of the first communication apparatus.

In a possible example, the communication module 901 may further send third information to a third communication apparatus, and the third information may indicate a correspondence between a third data radio bearer and a fourth data radio bearer. The third data radio bearer is a data radio bearer between the network device and the third communication apparatus, and the fourth data radio bearer is a data radio bearer between the third communication apparatus and the second communication apparatus. In addition, the communication module 901 may further send fourth information to the second communication apparatus, where the fourth information may indicate a correspondence between the first PDCP entity and a second RLC entity of the SL interface of the second communication apparatus, and the second RLC entity corresponds to the fourth data radio bearer.

In this example, the third data radio bearer does not include a PDCP entity of the third communication apparatus, and the fourth data radio bearer does not include the PDCP entity of the third communication apparatus.

In another possible example, the communication module 901 may further send fifth information to the second communication apparatus, where the fifth information may indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

When the foregoing network device is implemented, the communication apparatus may further include a hardware component. For ease of understanding and illustration, in FIG. 10, a base station is used as an example to describe a structure of a communication apparatus including the hardware component. The communication apparatus 1000 may include a processor 1022, a memory 1021, and a transceiver.

The communication apparatus 1000 includes one or more remote radio units (remote radio units, RRUs) 1010 and one or more baseband units (baseband units, BBUs) (which may also be referred to as digital units (digital units, DUs)) 1020. The RRU 1010 may be referred to as a communication module, may correspond to the communication module 901 in FIG. 9, and is configured to perform the foregoing steps performed by the communication module 901. The RRU 1010 may also be referred to as a transceiver machine, a transceiver circuit, a transceiver, or the like, and may include at least one antenna 1011 and a radio frequency unit 1012. The RRU 1010 may be configured to: send and receive a radio frequency signal, and perform conversion between a radio frequency signal and a baseband signal, for example, send the first information provided in embodiments of this application. It should be understood that the RRU 1010 may be considered as a transceiver, or the radio frequency unit 1012 may be considered as a transceiver. Optionally, the RRU 1010 may include a receiving unit and a sending unit. The receiving unit may correspond to a receiver (or referred to as a receiver machine or a receiving circuit), and the sending unit may correspond to a transmitter (or referred to as a transmitter machine or a transmitting circuit).

The BBU 1020 may be configured to: perform baseband processing such as channel encoding, multiplexing, modulation, and spectrum spreading, control the base station, and the like. The RRU 1010 and the BBU 1020 may be physically disposed together, or may be physically disposed separately, that is, in a distributed base station. The BBU 1020 is a control center of the base station, and may also be referred to as a processing module, a processing unit, or the like. The BBU 1020 may correspond to the processing module 902 in FIG. 9, and is configured to perform the foregoing steps performed by the processing module 902. The BBU 1020 may be further configured to complete baseband processing functions such as channel encoding, multiplexing, modulation, and spectrum spreading. For example, the BBU 1020 may be configured to control the network device to perform an operation procedure related to the network device in the foregoing method embodiments, for example, generate the first information.

In an example, the BBU 1020 may include one or more boards, and a plurality of boards may jointly support a radio access network (for example, an LTE network) of a single access standard, or may separately support radio access networks (for example, an LTE network, a 5G network, or another network) of different access standards. The BBU 1020 further includes a memory 1021 and a processor 1022. The memory 1021 is configured to store necessary computer programs or instructions, and data. The processor 1022 is configured to control the network device to perform a necessary action, for example, configured to control the network device to perform an operation procedure performed by a CU and/or a CU in the foregoing method embodiments.

For example, the processor 1022 may perform the foregoing steps performed by the processing module 902. The memory 1021 and the processor 1022 may serve one or more boards. In other words, a memory and a processor may be separately disposed on each board. Alternatively, a plurality of boards may share a same memory and a same processor. In addition, a necessary circuit may be further disposed on each board.

In addition, the network device is not limited to the foregoing forms, and may also be in another form. For example, the network device includes a BBU and an adaptive radio unit (adaptive radio unit, ARU), or includes a BBU and an active antenna unit (active antenna unit, AAU), or may be customer-premises equipment (customer-premises equipment, CPE), or may be in another form. This is not limited in this application.

The BBU 1020 may be configured to perform a processing action that is internally implemented by the network device and that is described in the foregoing method embodiments. The RRU 1210 (or the radio frequency unit 1012) may be configured to perform sending actions that are performed by the network device to the first communication apparatus and the like and that are described in the foregoing method embodiments.

Specifically, the RRU 1210 may be configured to send first information to the first communication apparatus. The first information may indicate a correspondence between a first data radio bearer and a second data radio bearer, the first data radio bearer is a data radio bearer between the network device and the first communication apparatus, and the second data radio bearer is a data radio bearer between the first communication apparatus and a second communication apparatus. The RRU 1210 may be further configured to send second information to the second communication apparatus, where the second information may indicate a correspondence between a first PDCP entity of a Uu interface of the second communication apparatus and a first RLC entity of an SL interface of the second communication apparatus, and the first RLC entity corresponds to the second data radio bearer.

For example, the first information may include a source identifier of the second data radio bearer and/or a destination identifier of the second data radio bearer.

The first data radio bearer does not include a PDCP entity of the first communication apparatus, and the second data radio bearer does not include the PDCP entity of the first communication apparatus.

In a possible example, the RRU 1210 may further send third information to a third communication apparatus, and the third information may indicate a correspondence between a third data radio bearer and a fourth data radio bearer. The third data radio bearer is a data radio bearer between the network device and the third communication apparatus, and the fourth data radio bearer is a data radio bearer between the third communication apparatus and the second communication apparatus. In addition, the RRU 1210 may further send fourth information to the second communication apparatus, where the fourth information may indicate a correspondence between the first PDCP entity and a second RLC entity of the SL interface of the second communication apparatus, and the second RLC entity corresponds to the fourth data radio bearer.

In this example, the third data radio bearer does not include a PDCP entity of the third communication apparatus, and the fourth data radio bearer does not include the PDCP entity of the third communication apparatus.

In another possible example, the RRU 1210 may further send fifth information to the second communication apparatus, where the fifth information may indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

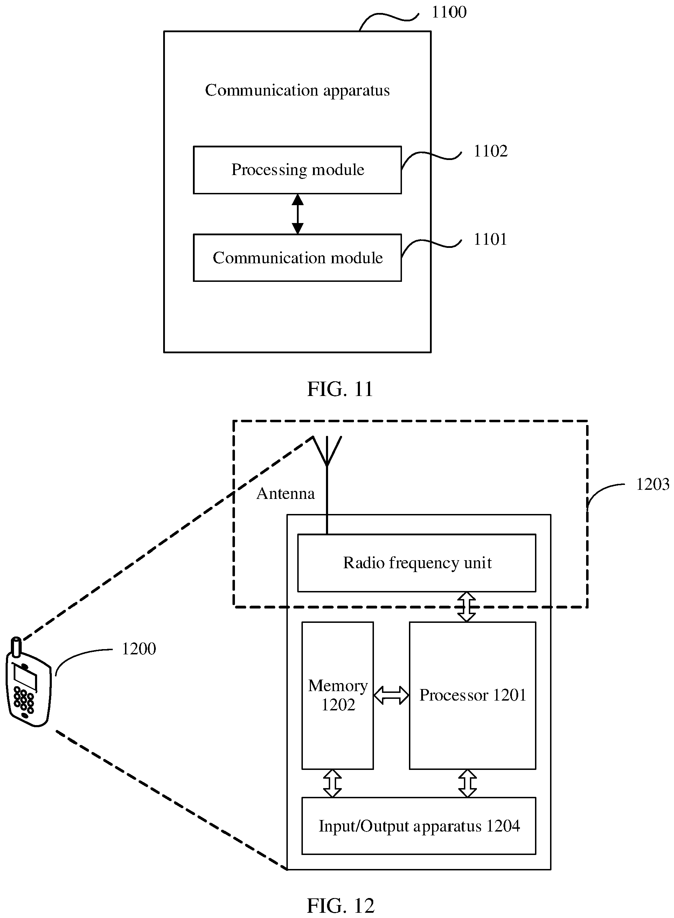

As shown in FIG. 11, a communication apparatus provided in an embodiment of this application may include a communication module 1101 and a processing module 1102. The communication module 1101 and the processing module 1102 are coupled to each other. The communication apparatus 1100 may be configured to perform steps performed by the first communication apparatus and/or the second communication apparatus in the foregoing method embodiments. The communication module 1101 may be configured to support the communication apparatus 100 in performing communication. The communication module 1101 may also be referred to as a communication unit, a communication interface, a transceiver module, or a transceiver unit. The communication module 1101 may have a wireless communication function, for example, can communicate with another communication apparatus in a wireless communication manner. The processing module 1102 may also be referred to as a processing unit, and may be configured to support the communication apparatus 1100 in performing processing actions of the first communication apparatus and/or the second communication apparatus in the foregoing method embodiments, including but not limited to: generating information or a message sent by the communication module 1101, demodulating and decoding a signal received by the communication module 1101, and the like.

When performing the steps performed by the first communication apparatus and/or the second communication apparatus in the foregoing method embodiments, the communication module 1101 may be configured to perform sending and/or receiving actions of the first communication apparatus and/or the second communication apparatus in the foregoing method embodiments, for example, configured to receive information, a message, or signaling from the network device. The processing module 1102 may be configured to perform a processing action of the first communication apparatus and/or the second communication apparatus in the foregoing method embodiments, for example, configured to control the communication module 101 to receive and/or send information, a message, or signaling, store the information, and the like.

Specifically, when performing an action of the first communication apparatus in embodiments of this application, the communication module 1101 may receive first information from a network device, where the first information may indicate a correspondence between a first data radio bearer and a second data radio bearer. The first data radio bearer is a data radio bearer between the network device and the first communication apparatus, the second data radio bearer is a data radio bearer between the first communication apparatus and the second communication apparatus, a first RLC entity of an SL interface of the second communication apparatus corresponds to the second data radio bearer, and a first PDCP entity of a Uu interface of the second communication apparatus corresponds to the first RLC entity of the SL interface.

For example, the first data radio bearer does not include a PDCP entity of the first communication apparatus, and the second data radio bearer does not include the PDCP entity of the first communication apparatus.

The communication module 1101 may further receive data from the network device by using the first data radio bearer, and send the data to the second communication apparatus by using the second data radio bearer.

In addition, the communication module 1101 may further receive data from the second communication apparatus by using the second data radio bearer, and send the data to the network device by using the first data radio bearer.

The first information may include a source identifier of the second data radio bearer and/or a destination identifier of the second data radio bearer.

When performing an action of the second communication apparatus in embodiments of this application, the communication module 1101 may receive second information from the network device, where the second information may indicate a correspondence between a first PDCP entity of a Uu interface of the second communication apparatus and a first RLC entity of an SL interface of the second communication apparatus. The first RLC entity corresponds to a second data radio bearer, the second data radio bearer is a data radio bearer between the first communication apparatus and the second communication apparatus, a first data radio bearer is maintained between the first communication apparatus and the network device, and the first data radio bearer corresponds to the second data radio bearer.

For example, the first data radio bearer does not include a PDCP entity of the first communication apparatus, and the second data radio bearer does not include the PDCP entity of the first communication apparatus.

In a possible example, the communication module 1101 may further receive fourth information from the network device, where the fourth information is used to indicate a correspondence between the first PDCP entity and a second RLC entity of the SL interface of the second communication apparatus. The second RLC entity corresponds to a fourth data radio bearer, the fourth data radio bearer is a data radio bearer between a third communication apparatus and the second communication apparatus, a third data radio bearer is maintained between the third communication apparatus and the network device, and the fourth data radio bearer corresponds to the third data radio bearer.

In this example, the third data radio bearer does not include a PDCP entity of the third communication apparatus, and the fourth data radio bearer does not include the PDCP entity of the third communication apparatus.

In a possible example, the communication module 1101 may further receive fifth information from the network device, where the fifth information is used to indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

When the first communication apparatus and/or the second communication apparatus are/is implemented, the communication apparatus may further include a hardware component. For ease of understanding and illustration, in FIG. 12, a mobile phone is used as an example to describe a structure of the communication apparatus 1200 when the first communication apparatus and/or the second communication apparatus include/includes the hardware component. As shown in FIG. 12, the communication apparatus 1200 may include a processor 1201, a memory 1202, and a transceiver 1203.

The processor 1201, the transceiver 1203, and the memory 1202 may perform communication by using an internal connection path, to transfer a control signal and/or a data signal. The memory 1202 is configured to store a computer program. The processor 1201 is configured to invoke and run the computer program in the memory 1202, to control the transceiver 1203 to send/receive a signal.

The foregoing processor 1201 may be configured to: process a communication protocol and communication data, control the communication apparatus 1000, execute a program, process data of the program, and the like. The memory 1202 may be configured to store the program and data, and the processor 1201 may perform, based on the program, the method performed by a receive end device in embodiments of this application.

The transceiver 1203 may correspond to the communication module 1101 in FIG. 11, and may also be referred to as a transceiver unit. The transceiver 1203 may include a receiver (or referred to as a receiver machine or a receiver circuit) and a transmitter (or referred to as a transmitter machine or a transmitter circuit). The receiver is configured to receive a signal, and the transmitter is configured to transmit a signal. The transceiver 1203 may specifically include a radio frequency unit and an antenna. The radio frequency unit may be configured to: perform conversion between a baseband signal and a radio frequency signal, and process the radio frequency signal. The antenna may be configured to send and receive a radio frequency signal in a form of an electromagnetic wave. In addition, the radio frequency unit may be considered as the transceiver 1203. In this case, the communication apparatus 1200 may include the processor 1201, the memory 1202, the transceiver 1203, and the antenna.

In addition, the communication apparatus 1200 may further include an input/output apparatus 1204, for example, a touchscreen, a display screen, a keyboard, or another component that may be configured to receive data input by a user and output data to the user. It should be noted that some types of communication apparatuses may have no input/output apparatus.

For example, the processor 1201 and the memory 1202 may be integrated into a processing apparatus, and the processor 1201 is configured to execute a computer program or instructions stored in the memory 1202 to implement the foregoing functions. During specific implementation, the memory 1202 may alternatively be integrated into the processor 1201, or may be independent of the processor 1201.

It should be understood that the communication module 1101 may have a structure shown in the transceiver 1203, that is, the communication module 1101 includes the radio frequency unit and the antenna. Alternatively, the communication module 1101 may include the foregoing radio frequency unit. The foregoing processing module 1102 may include the processor 1201, or include the processor 1022 and the memory 1021.

The communication apparatus 1200 may alternatively include a chip. For example, the chip includes the processor 1201. In addition, the chip may further include a memory 1202 and a transceiver 1203. Any two of the memory 1202, the transceiver 1203, and the processor 1201 may be coupled to each other.

Based on the structure shown in FIG. 12, when performing an action of the first communication apparatus in embodiments of this application, the transceiver 1203 may receive first information from a network device, where the first information may indicate a correspondence between a first data radio bearer and a second data radio bearer. The first data radio bearer is a data radio bearer between the network device and the first communication apparatus, the second data radio bearer is a data radio bearer between the first communication apparatus and the second communication apparatus, a first RLC entity of an SL interface of the second communication apparatus corresponds to the second data radio bearer, and a first PDCP entity of a Uu interface of the second communication apparatus corresponds to the first RLC entity of the SL interface.

For example, the first data radio bearer does not include a PDCP entity of the first communication apparatus, and the second data radio bearer does not include the PDCP entity of the first communication apparatus.

The transceiver 1203 may further receive data from the network device by using the first data radio bearer, and send the data to the second communication apparatus by using the second data radio bearer.

In addition, the transceiver 1203 may further receive data from the second communication apparatus by using the second data radio bearer, and send the data to the network device by using the first data radio bearer.

The first information may include a source identifier of the second data radio bearer and/or a destination identifier of the second data radio bearer.

When performing an action of the second communication apparatus in embodiments of this application, the transceiver 1203 may receive second information from a network device, where the second information may indicate a correspondence between a first PDCP entity of a Uu interface of the second communication apparatus and a first RLC entity of an SL interface of the second communication apparatus. The first RLC entity corresponds to a second data radio bearer, the second data radio bearer is a data radio bearer between the first communication apparatus and the second communication apparatus, a first data radio bearer is maintained between the first communication apparatus and the network device, and the first data radio bearer corresponds to the second data radio bearer.

For example, the first data radio bearer does not include a PDCP entity of the first communication apparatus, and the second data radio bearer does not include the PDCP entity of the first communication apparatus.

In a possible example, the transceiver 1203 may further receive fourth information from the network device, where the fourth information is used to indicate a correspondence between the first PDCP entity and a second RLC entity of the SL interface of the second communication apparatus. The second RLC entity corresponds to a fourth data radio bearer, the fourth data radio bearer is a data radio bearer between a third communication apparatus and the second communication apparatus, a third data radio bearer is maintained between the third communication apparatus and the network device, and the fourth data radio bearer corresponds to the third data radio bearer.

In this example, the third data radio bearer does not include a PDCP entity of the third communication apparatus, and the fourth data radio bearer does not include the PDCP entity of the third communication apparatus.

In a possible example, the transceiver 1203 may further receive fifth information from the network device, where the fifth information is used to indicate a correspondence between the first PDCP entity and a third RLC entity of the Uu interface of the second communication apparatus. The third RLC entity corresponds to a fifth data radio bearer, and the fifth data radio bearer is a data radio bearer between the network device and the second communication apparatus.

Based on a same concept as that of the foregoing method embodiments, an embodiment of this application further provides a computer-readable storage medium. The computer-readable storage medium stores a computer program. When the program is executed by a processor, the computer is enabled to implement an operation performed by the network device, the first communication apparatus and/or the second communication apparatus in the method embodiments or any possible implementation of the method embodiments.

Based on a same concept as that of the foregoing method embodiments, this application further provides a computer program product. The computer program product may include a computer program or instructions. When the computer program is or the instructions are invoked and executed by a computer, the computer is enabled to implement an operation performed by the network device, the first communication apparatus and/or the second communication apparatus in the method embodiments or any possible implementation of the method embodiments.

Based on a same concept as that of the foregoing method embodiments, this application further provides a chip or a chip system. The chip may include a processor. The chip may further include a memory (or a storage module) and/or a transceiver (or a communication module); or the chip is coupled to a memory (or a storage module) and/or a transceiver (or a communication module). The transceiver (or the communication module) may be configured to support the chip in performing wired and/or wireless communication. The memory (or the storage module) may be configured to store a program. The processor invokes the program to implement an operation performed by the network device, the first communication apparatus and/or the second communication apparatus in the method embodiments or any possible implementation of the method embodiments. The chip system may include the chip, or may include the chip and another discrete component, such as a memory (or a storage module) and/or a transceiver (or a communication module).

Based on a same concept as that of the foregoing method embodiments, this application further provides a communication system. The communication system may include a network device, a first communication apparatus and/or a second communication apparatus. The communication system may be configured to implement an operation performed by the network device, the first communication apparatus and/or the second communication apparatus in the method embodiments or any possible implementation of the method embodiments. For example, the communication system may have a structure shown in FIG. 1 or FIG. 3.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disc, SSD)), or the like.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Embodiments of this application are described with reference to the flowcharts and/or block diagrams of the method, the apparatus, and the computer program product according to the embodiments. It should be understood that computer programs or instructions may be used to implement each procedure and/or each block in the flowcharts and/or the block diagrams and a combination of procedures and/or blocks in the flowcharts and/or the block diagrams. These computer programs or instructions may be provided for a general-purpose computer, a dedicated computer, an embedded processor, or a processor of another programmable data processing device to generate a machine, so that the computer programs or instructions executed by a computer or the processor of the another programmable data processing device generate an apparatus for implementing a specific function in one or more procedures in the flowcharts and/or one or more blocks in the block diagrams.

These computer programs or instructions may alternatively be stored in a computer-readable memory that can indicate a computer or another programmable data processing device to work in a specific manner, so that the computer programs or instructions stored in the computer-readable memory generate an artifact that includes an instruction apparatus. The instruction apparatus implements a specific function in one or more procedures in the flowcharts and/or one or more blocks in the block diagrams.

These computer programs or instructions may also be loaded onto a computer or another programmable data processing device, so that a series of operations and steps are performed on the computer or the another programmable device to generate computer-implemented processing. Therefore, the computer programs or instructions executed on the computer or the another programmable device provide steps for implementing a specific function in one or more procedures in the flowcharts and/or one or more blocks in the block diagrams.

## Claims

1. A communication method, comprising:
sending (S101), by a network device, first information to a first communication apparatus, wherein the first information is used to indicate a correspondence between a first data radio bearer and a second data radio bearer, the first data radio bearer is a data radio bearer between the network device and the first communication apparatus, and the second data radio bearer is a data radio bearer between the first communication apparatus and a second communication apparatus;
**characterized in that** the method further comprises:
sending (S102), by the network device, second information to the second communication apparatus, wherein the second information is used to indicate a correspondence between a first packet data convergence protocol, PDCP, entity of a Uu interface of the second communication apparatus and a first radio link control, RLC, entity of an sidelink, SL, interface of the second communication apparatus, and the first RLC entity corresponds to the second data radio bearer.

2. The method according to claim 1, wherein the first data radio bearer does not comprise a PDCP entity of the first communication apparatus, and the second data radio bearer does not comprise the PDCP entity of the first communication apparatus.

3. The method according to claim 1 or 2, wherein the method further comprises:
sending, by the network device, third information to a third communication apparatus, wherein the third information is used to indicate a correspondence between a third data radio bearer and a fourth data radio bearer, the third data radio bearer is a data radio bearer between the network device and the third communication apparatus, and the fourth data radio bearer is a data radio bearer between the third communication apparatus and the second communication apparatus; and
sending, by the network device, fourth information to the second communication apparatus, wherein the fourth information is used to indicate a correspondence between the first PDCP entity and a second RLC entity of the SL interface of the second communication apparatus, and the second RLC entity corresponds to the fourth data radio bearer.

4. The method according to claim 3, wherein the third data radio bearer does not comprise a PDCP entity of the third communication apparatus, and the fourth data radio bearer does not comprise the PDCP entity of the third communication apparatus.

5. The method according to any one of claims 1 to 4, wherein the method further comprises:
sending, by the network device, fifth information to the second communication apparatus, wherein the fifth information is used to indicate a correspondence between the first PDCP entity and a third RLC entity of the Uu interface of the second communication apparatus, the third RLC entity corresponds to a fifth data radio bearer, and the fifth data radio bearer is a data radio bearer between the network device and the second communication apparatus.

6. A communication method, comprising:
receiving (S101), by a first communication apparatus, first information from a network device, wherein the first information is used to indicate a correspondence between a first data radio bearer and a second data radio bearer, the first data radio bearer is a data radio bearer between the network device and the first communication apparatus, and the second data radio bearer is a data radio bearer between the first communication apparatus and a second communication apparatus;
**characterized in that** a first radio link control, RLC, entity of an sidelink, SL, interface of the second communication apparatus corresponds to the second data radio bearer, and a first packet data convergence protocol, PDCP, entity of a Uu interface of the second communication apparatus corresponds to the first RLC entity of the SL interface.

7. The method according to claim 6, wherein the first data radio bearer does not comprise a PDCP entity of the first communication apparatus, and the second data radio bearer does not comprise the PDCP entity of the first communication apparatus.

8. The method according to claim 6 or 7, wherein the method further comprises:
receiving, by the first communication apparatus, data from the network device by using the first data radio bearer; and
sending, by the first communication apparatus, the data to the second communication apparatus by using the second data radio bearer.

9. The method according to any one of claims 6 to 8, wherein the method further comprises:
receiving, by the first communication apparatus, data from the second communication apparatus by using the second data radio bearer; and
sending, by the first communication apparatus, the data to the network device by using the first data radio bearer.

10. An apparatus (900), wherein the apparatus (900) is configured to perform the method according to any one of claims 1 to 5.

11. A computer readable storage medium comprising an instruction, wherein which, when executed by a computer device, cause the computer device to perform the method according to any one of claims 1 to 5.

12. A computer program product, comprising an instruction, wherein which, when executed by a computer device, cause the computer device to perform the method according to any one of claims 1 to 5.

13. An apparatus (1100), wherein the apparatus (1100) is configured to perform the method according to any one of claims 6 to 9.

14. A computer readable storage medium comprising an instruction, wherein which, when executed by a computer device, cause the computer device to perform the method according to any one of claims 6 to 9.

15. A computer program product, comprising an instruction, wherein which, when executed by a computer device, cause the computer device to perform the method according to any one of claims 6 to 9.

## Patentansprüche

1. Kommunikationsverfahren, umfassend:
Senden (S101) von ersten Informationen durch eine Netzwerkvorrichtung an eine erste Kommunikationsvorrichtung, wobei die ersten Informationen verwendet werden, um eine Entsprechung zwischen einem ersten Datenfunkträger und einem zweiten Datenfunkträger anzugeben, wobei der erste Datenfunkträger ein Datenfunkträger zwischen der Netzwerkvorrichtung und der ersten Kommunikationsvorrichtung ist, und wobei der zweite Datenfunkträger ein Datenfunkträger zwischen der ersten Kommunikationsvorrichtung und einer zweiten Kommunikationsvorrichtung ist;
**dadurch gekennzeichnet, dass** das Verfahren ferner Folgendes umfasst:
Senden (S102) von zweiten Informationen durch die Netzwerkvorrichtung an die zweite Kommunikationsvorrichtung, wobei die zweiten Informationen verwendet werden, um eine Entsprechung zwischen einer ersten Paketdatenkonvergenzprotokoll-, (packet data convergence protocol, PDCP), Einheit einer Uu-, (universal user to network interface), Schnittstelle der zweiten Kommunikationsvorrichtung und einer ersten Funkverbindungssteuerungs-, (radio link control, RLC), Einheit einer Sidelink-, SL, Schnittstelle der zweiten Kommunikationsvorrichtung anzugeben, und die erste RLC-Einheit dem zweiten Datenfunkträger entspricht.

2. Verfahren gemäß Anspruch 1, wobei der erste Datenfunkträger keine PDCP-Einheit der ersten Kommunikationsvorrichtung umfasst und der zweite Datenfunkträger nicht die PDCP-Einheit der ersten Kommunikationsvorrichtung umfasst.

3. Verfahren gemäß Anspruch 1 oder 2, wobei das Verfahren ferner Folgendes umfasst:
Senden von dritten Informationen durch die Netzwerkvorrichtung an eine dritte Kommunikationsvorrichtung, wobei die dritten Informationen verwendet werden, um eine Entsprechung zwischen einem dritten Datenfunkträger und einem vierten Datenfunkträger anzugeben, wobei der dritte Datenfunkträger ein Datenfunkträger zwischen der Netzwerkvorrichtung und der dritten Kommunikationsvorrichtung ist, und der vierte Datenfunkträger ein Datenfunkträger zwischen der dritten Kommunikationsvorrichtung und der zweiten Kommunikationsvorrichtung ist; und
Senden von vierten Informationen durch die Netzwerkvorrichtung an die zweite Kommunikationsvorrichtung, wobei die vierten Informationen verwendet werden, um eine Entsprechung zwischen der ersten PDCP-Einheit und einer zweiten RLC-Einheit der SL-, (sidelink), Schnittstelle der zweiten Kommunikationsvorrichtung anzugeben, und die zweite RLC-Einheit dem vierten Datenfunkträger entspricht.

4. Verfahren gemäß Anspruch 3, wobei der dritte Datenfunkträger keine PDCP-Einheit der dritten Kommunikationsvorrichtung umfasst, und der vierte Datenfunkträger nicht die PDCP-Einheit der dritten Kommunikationsvorrichtung umfasst.

5. Verfahren gemäß einem der Ansprüche 1 bis 4, wobei das Verfahren ferner Folgendes umfasst:
Senden von fünften Informationen durch die Netzwerkvorrichtung an die zweite Kommunikationsvorrichtung, wobei die fünften Informationen verwendet werden, um eine Entsprechung zwischen der ersten PDCP-Einheit und einer dritten RLC-Einheit der Uu-Schnittstelle der zweiten Kommunikationsvorrichtung anzugeben, die dritte RLC-Einheit einem fünften Datenfunkträger entspricht, und der fünfte Datenfunkträger ein Datenfunkträger zwischen der Netzwerkvorrichtung und der zweiten Kommunikationsvorrichtung ist.

6. Kommunikationsverfahren, umfassend:
Empfangen (S101) von ersten Informationen aus einer Netzwerkvorrichtung durch eine erste Kommunikationsvorrichtung, wobei die ersten Informationen verwendet werden, um eine Entsprechung zwischen einem ersten Datenfunkträger und einem zweiten Datenfunkträger anzugeben, wobei der erste Datenfunkträger ein Datenfunkträger zwischen der Netzwerkvorrichtung und der ersten Kommunikationsvorrichtung ist, und wobei der zweite Datenfunkträger ein Datenfunkträger zwischen der ersten Kommunikationsvorrichtung und einer zweiten Kommunikationsvorrichtung ist;
**dadurch gekennzeichnet, dass** eine erste Funkverbindungssteuerungs-, RLC, Einheit einer Sidelink-, SL, Schnittstelle der zweiten Kommunikationsvorrichtung dem zweiten Datenfunkträger entspricht und eine erste Paketdatenkonvergenzprotokoll-, PDCP, Einheit einer Uu-Schnittstelle der zweiten Kommunikationsvorrichtung der ersten RLC-Einheit der SL-Schnittstelle entspricht.

7. Verfahren gemäß Anspruch 6, wobei der erste Datenfunkträger keine PDCP-Einheit der ersten Kommunikationsvorrichtung umfasst, und der zweite Datenfunkträger nicht die PDCP-Einheit der ersten Kommunikationsvorrichtung umfasst.

8. Verfahren gemäß Anspruch 6 oder 7, wobei das Verfahren ferner Folgendes umfasst:
Empfangen von Daten aus der Netzwerkvorrichtung durch die erste Kommunikationsvorrichtung unter Verwendung des ersten Datenfunkträgers; und
Senden der Daten durch die erste Kommunikationsvorrichtung an die zweite Kommunikationsvorrichtung unter Verwendung des zweiten Datenfunkträgers.

9. Verfahren gemäß einem der Ansprüche 6 bis 8, wobei das Verfahren ferner Folgendes umfasst:
Empfangen von Daten aus der zweiten Kommunikationsvorrichtung durch die erste Kommunikationsvorrichtung unter Verwendung des zweiten Datenfunkträgers; und
Senden der Daten durch die erste Kommunikationsvorrichtung an die Netzwerkvorrichtung unter Verwendung des ersten Datenfunkträgers.

10. Vorrichtung (900), wobei die Vorrichtung (900) konfiguriert ist, um das Verfahren gemäß einem der Ansprüche 1 bis 5 durchzuführen.

11. Computerlesbares Speichermedium, umfassend eine Anweisung, wobei diese bei Ausführung durch eine Computervorrichtung bewirkt, dass die Computervorrichtung das Verfahren gemäß einem der Ansprüche 1 bis 5 durchführt.

12. Computerprogrammprodukt, umfassend eine Anweisung, wobei diese bei Ausführung durch eine Computervorrichtung bewirkt, dass die Computervorrichtung das Verfahren gemäß einem der Ansprüche 1 bis 5 durchführt.

13. Vorrichtung (1100), wobei die Vorrichtung (1100) konfiguriert ist, um das Verfahren gemäß einem der Ansprüche 6 bis 9 durchzuführen.

14. Computerlesbares Speichermedium, umfassend eine Anweisung, wobei diese bei Ausführung durch eine Computervorrichtung bewirkt, dass die Computervorrichtung das Verfahren gemäß einem der Ansprüche 6 bis 9 durchführt.

15. Computerprogrammprodukt, umfassend eine Anweisung, wobei diese bei Ausführung durch eine Computervorrichtung bewirkt, dass die Computervorrichtung das Verfahren gemäß einem der Ansprüche 6 bis 9 durchführt.

## Revendications

1. Procédé de communication, comprenant :
l'envoi (S101), par un dispositif réseau, de premières informations à un premier appareil de communication, dans lequel les premières informations sont utilisées pour indiquer une correspondance entre une première porteuse radio de données et une deuxième porteuse radio de données, la première porteuse radio de données est une porteuse radio de données entre le dispositif réseau et le premier appareil de communication, et la deuxième porteuse radio de données est une porteuse radio de données entre le premier appareil de communication et un deuxième appareil de communication ;
**caractérisé en ce que** le procédé comprend également :
l'envoi (S102), par le dispositif réseau, de deuxièmes informations au deuxième appareil de communication, dans lequel les deuxièmes informations sont utilisées pour indiquer une correspondance entre une première entité de protocole de convergence de données par paquets, PDCP, d'une interface Uu du deuxième appareil de communication et une première entité de commande de liaison radio, RLC, d'une interface de liaison latérale, SL, du deuxième appareil de communication, et la première entité RLC correspond à la deuxième porteuse radio de données.

2. Procédé selon la revendication 1, dans lequel la première porteuse radio de données ne comprend pas une entité PDCP du premier appareil de communication, et la deuxième porteuse radio de données ne comprend pas l'entité PDCP du premier appareil de communication.

3. Procédé selon la revendication 1 ou 2, dans lequel le procédé comprend également :
l'envoi, par le dispositif réseau, de troisièmes informations à un troisième appareil de communication, dans lequel les troisièmes informations sont utilisées pour indiquer une correspondance entre une troisième porteuse radio de données et une quatrième porteuse radio de données, la troisième porteuse radio de données est une porteuse radio de données entre le dispositif réseau et le premier appareil de communication, et la quatrième porteuse radio de données est une porteuse radio de données entre le troisième appareil de communication et le deuxième appareil de communication ; et
l'envoi, par le dispositif réseau, de quatrièmes informations au deuxième appareil de communication, dans lequel les quatrièmes informations sont utilisées pour indiquer une correspondance entre la première entité PDCP et une deuxième entité RLC de l'interface SL du deuxième appareil de communication, et la deuxième entité RLC correspond à la quatrième porteuse radio de données.

4. Procédé selon la revendication 3, dans lequel la troisième porteuse radio de données ne comprend pas une entité PDCP du troisième appareil de communication, et la quatrième porteuse radio de données ne comprend pas l'entité PDCP du troisième appareil de communication.

5. Procédé selon l'une quelconque des revendications 1 à 4, dans lequel le procédé comprend également :
l'envoi, par le dispositif réseau, de cinquièmes informations au deuxième appareil de communication, dans lequel les cinquièmes informations sont utilisées pour indiquer une correspondance entre la première entité PDCP et une troisième entité RLC de l'interface Uu du deuxième appareil de communication, la troisième entité RLC correspond à une cinquième porteuse radio de données, et la cinquième porteuse radio de données est une porteuse radio de données entre le dispositif réseau et le deuxième appareil de communication.

6. Procédé de communication, comprenant :
la réception (S101), par un premier appareil de communication, de premières informations provenant d'un dispositif réseau, dans lequel les premières informations sont utilisées pour indiquer une correspondance entre une première porteuse radio de données et une deuxième porteuse radio de données, la première porteuse radio de données est une porteuse radio de données entre le dispositif réseau et le premier appareil de communication, et la deuxième porteuse radio de données est une porteuse radio de données entre le premier appareil de communication et un deuxième appareil de communication ;
**caractérisé en ce qu'**une première entité de commande de liaison radio, RLC, d'une interface de liaison latérale, SL, du deuxième appareil de communication correspond à la deuxième porteuse radio de données, et une première entité de protocole de convergence de données par paquets, PDCP, d'une interface Uu du deuxième appareil de communication correspond à la première entité RLC de l'interface SL.

7. Procédé selon la revendication 6, dans lequel la première porteuse radio de données ne comprend pas une entité PDCP du premier appareil de communication, et la deuxième porteuse radio de données ne comprend pas l'entité PDCP du premier appareil de communication.

8. Procédé selon la revendication 6 ou 7, dans lequel le procédé comprend également :
la réception, par le premier appareil de communication, de données provenant du dispositif réseau à l'aide de la première porteuse radio de données ; et
l'envoi, par le premier appareil de communication, des données au deuxième appareil de communication à l'aide de la deuxième porteuse radio de données.

9. Procédé selon l'une quelconque des revendications 6 à 8, dans lequel le procédé comprend également :
la réception, par le premier appareil de communication, de données provenant du deuxième appareil de communication à l'aide de la deuxième porteuse radio de données ; et
l'envoi, par le premier appareil de communication, des données au dispositif réseau à l'aide de la première porteuse radio de données.

10. Appareil (900), dans lequel l'appareil (900) est configuré pour réaliser le procédé selon l'une quelconque des revendications 1 à 5.

11. Support de stockage lisible par ordinateur comprenant une instruction, dans lequel laquelle, lorsqu'elle est exécutée par un dispositif informatique, amène le dispositif informatique à réaliser le procédé selon l'une quelconque des revendications 1 à 5.

12. Produit de programme informatique comprenant une instruction, dans lequel laquelle, lorsqu'elle est exécutée par un dispositif informatique, amène le dispositif informatique à réaliser le procédé selon l'une quelconque des revendications 1 à 5.

13. Appareil (1100), dans lequel l'appareil (1100) est configuré pour réaliser le procédé selon l'une quelconque des revendications 6 à 9.

14. Support de stockage lisible par ordinateur comprenant une instruction, dans lequel laquelle, lorsqu'elle est exécutée par un dispositif informatique, amène le dispositif informatique à réaliser le procédé selon l'une quelconque des revendications 6 à 9.

15. Produit de programme informatique comprenant une instruction, dans lequel laquelle, lorsqu'elle est exécutée par un dispositif informatique, amène le dispositif informatique à réaliser le procédé selon l'une quelconque des revendications 6 à 9.
